# EUROPÄISCHE PATENTSCHRIFT

(11) **EP 1 795 424 B1**
(45) Veröffentlichungstag und Bekanntmachung des Hinweises auf die Patenterteilung: **13.05.2009**
(21) Anmeldenummer: 06125662.4
(22) Anmeldetag: 08.12.2006
(51) Int. Cl.: B62B 9/12, A63H 3/52

(54) **Umwandelbarer Sitz-Liegeeinsatz für Kinder- oder Puppenwagen**
Transformable seat inlet for child's or doll's pram
Garniture de siège ou de lit transformable pour landaus d'enfants ou de poupées

(30) Priorität: 08.12.2005 DE 202005019191 U
(43) Veröffentlichungstag der Anmeldung: 13.06.2007
(73) Patentinhaber: Beger, Udo, 84030 Ergolding (DE)
(72) Erfinder: Beger, Udo, 84030 Ergolding (DE)
(74) Vertreter: Pröll, Jürgen

(56) Entgegenhaltungen:
- EP-A- 0 347 361
- WO-A-20/06034615
- DE-A1- 2 348 716
- DE-A1- 3 522 270
- DE-A1-3102004 022 84
- DE-U1- 8 903 102
- DE-U1- 20 007 948
- DE-U1- 20 211 272
- DE-U1- 20 219 252
- DE-U1- 29 923 625
- DE-U1-0202004 018 18
- DE-U1-6202004 020 18
- FR-A- 2 593 762
- US-B1- 6 325 406

## Beschreibung

Die Erfindung betrifft einen umwandelbaren Sitz-Liegeeinsatz für Kinder- oder Puppenwagen mit Einrichtungen zum Befestigen an Trägerelementen in oder an dem Fahrgestell des Kinder- oder Puppenwagens mit den im Oberbegriff des Anspruchs 1 angegebenen Merkmalen.

Ein gattungsgemäßer Sitz-/Liegeeinsatz für Kinderwagen bzw. faltbare Kindersportwagen ist aus der DE 35 22 270 A1 , welche den nächstliegenden Stand der Technik bildet, bekannt. Der Einsatz weist einen Boden und eine seitliche Schürze aus textilem Gewebe auf, die an einem Rahmen hängend befestigt ist. Der Boden ist entlang mindestens einer querverlaufenden Biegeachsenlinie verformbar ausgebildet. Ferner sind Rückhalteeinrichtungen in Form von Gurten oder Bändern vorgesehen, um die aktive Höhe der Schürze auf jeder Seite des Einsatzes vom oberen Rand ausgehend mindestens an einem Punkt lokal variieren zu können. Wenn die Rückhalteeinrichtungen nicht zum Einsatz kommen, bestimmt die maximale Höhe der Schürze den Bodenabstand zum Rahmen. Es entsteht in dieser Gebrauchsposition ein Liegeeinsatz. Wenn die Rückhalteeinrichtungen jedoch in Benutzung genommen werden, wird der Boden im Bezug auf den Rand lokal angehoben, wodurch sich der Boden biegt bzw. faltet und einen Rücken- und einen Sitzteil definiert, wodurch ein Sitz realisiert wird. In dieser Position wird der Einsatz schräg in das Kinderwagegestell eingesetzt. Zu diesem Zweck sind beidseitig im Kinderwagengestell Halterungen zur schwenkbaren Befestigung des Rahmens vorgesehen. Die Biege- bzw. Faltlinien können durch querverlaufende Abnäher, Nähte, auch Klebe- und Schweißnähte, gebildet sein, wobei die Materialoberseite und die Materialunterseite und gegebenenfalls flexible Zwischenschichten des Bodens miteinander verbunden werden. Die dadurch abgegrenzten Felder sind mit Versteifungsmitteln versteift. Das Behältnis kann auch als Babytragetasche verwendet werden.

Aus der DE 37 02 846 C2 ist ein Kindersportwagen mit einem schwenkbaren Aufsatz bekannt, der zwischen den Seitenstreben angeordnet ist und einen Tragrahmen aufweist, der an den Seitenstreben des Fahrgestells über Halterungen schwenkbar um eine horizontale Querachse gelagert ist. Der Aufsatz weist einen hängemattenartigen Einsatz aus flexiblem Material und einen Boden auf, der längs zweier Querfalten verformbar ist, so dass in Abhängigkeit von der Stellung eines untenseitig angelenkten und an den Haltern an den Seitenholmen des Fahrgestells befestigbaren Stützelementes aus zwei U-förmig gebogenen Bügeln ein Liege- und Sitzeinsatz realisierbar ist. Zusätzlich ist der Einsatz längs der Stützstreben des Fahrgestells mit den Haltern verschiebbar angeordnet.

Aus der DE 89 03 102 U1 ist ein Kinderwagen für Babys und Kleinkinder bekannt, der als Sportwagen ausgebildet ist und seitliche Holme aufweist, an und zwischen denen ein Kindersitzeinsatz mit ausgeformtem Sitz verschwenkbar befestigt ist. Dieser Sitzeinsatz lässt sich aus einer Schrägposition in eine Horizontale verbringen, in der das Kleinkind in der Sitzschale mit angewinkelten Beinen liegt.

Aus der DE 299 23 625 U ist ein Buggy, umfassend einen Rahmen mit Vorder- und Hinterrädern, einer Zug- und Druckstange, Vorder- und Hinterradstangen, bekannt, die die Vorder- und Hinterräder tragen und mit der Zug- und Druckstange verbunden sind. Die Elemente sind über eine Kopplungsvorrichtung an jeder der Seiten für die drehbare Verbindung der Zug- und Druckstange und der Vorderrad- und Hinterradstangen miteinander verbunden. Die Kopplungsvorrichtung ist ferner für das lösbare Einpassen des Sitzes ausgerüstet. Der Sitz ist über einen Adapter, der im Neigungswinkel verstellbar ist, sowie an einem obenseitig am Adapter vorgesehenen Schwenklager im Gestell befestigt. Bei dem Sitz handelt es sich um einen Formsitz, der in verschiedene Schwenkpositionen verstellbar ist, ohne dass sich die Sitzform ändert. Der fußseitige Überstand und der Adapter bilden dabei auch eine Aufstellmöglichkeit auf einem Boden.

Aus der älteren WO 2006/034615 A1 ist ein veränderbarer Sitz-/Liegeeinsatz für Kinderwägen bekannt, der ein mittiges Bodenteil aufweist, das im Fahrgestell verankert werden kann und eine Sitzfläche bildet. An diesem Träger sind beidseitig verschwenkbar Stützteile befestigt, an denen der Rahmen des Sitz-/Liegeeinsatzes fixiert ist. Der Boden wird aus aneinander gelenkten Bodenteilen gebildet, wobei das Kopfteil mit dem in Verlängerung angebundenen Rückenlehnenabschnitt aus einer horizontalen in eine schräge Rückenlehnenposition verschwenkbar ist und die Fußwand mit dem angefügten und am Basisteil angelenkten Abschnitt ein Wadenstützteil bildet.

Aus der DE 10 2004 022 843 A1 ist ein Sitz-Liegeeinsatz für ein Kinder- und/oder Puppenwagengestell bekannt, das folgende Teile aufweist:
- ein Sitzbasisteil mit Einrichtungen zum Befestigen an dem Wagengestell und mit Seitenteilen und einem Sitzteil zwischen den Seitenteilen,
- eine an dem Sitzbasisteil rückseitig vorgesehene, in verschiedene Schwenkstellungen verbringbare Rückenlehne, die mindestens aus einer aufgestellten Position in eine im Wesentlichen horizontale Position verbringbar ist, in der sie eine rückseitige Verlängerung des Sitzteiles bildet,
- eine an dem Sitzbasisteil vorderseitig vorgesehene, in verschiedene Verschwenkstellungen gegenüber der Ebene des Sitzteils nach unten verbringbare Fußraste mit Beinstützteil, die aus mindestens einer unteren Schwenkstellung in eine im Wesentlichen horizontale Position verbringbar ist, in der sie eine vorderseitige Verlängerung des Sitzteiles und gemeinsam mit diesem und der Rückenlehne eine Aufstellfläche für einen Kleinkind- oder Puppenwagenliegeeinsatz bildet.

Aus der DE 202 11 272 U1 ist ein zusammenklappbarer Zwillingskinderwagen bekannt, bei dem die Rückenlehne jedes einzelnen Einsatzes nach vorne zur Einnahme einer Verstauposition klappbar ist. Die Rückenlehne übersteht dabei die Seitenwände des seitlichen Sitzeinsatzes wesentlich.

Aus der DE 20 2004 018 180 U1 ist ein Einsatz für einen zusammenklappbaren Schiebewagen für Kinder und/oder Puppen mit einem Wagengestell bekannt, das folgende Teile aufweist:
- zwei spiegelbildlich angeordnete, in der Aufstellposition von vorn nach hinten ansteigend und im Wesentlichen V-förmig verlaufende durchgehende oder aus miteinander verbundenen Abschnitten gebildete Gestellholme, deren untere Enden schwenkbar an oder in einem Verbindungsteil für andere Gestellteile und/oder einer vorderen Radanordnung mit mindestens einem Rad angelenkt sind und
- mit mindestens einem Halter an jedem der Gestellholme zum Befestigen eines im Wesentlichen horizontal verlaufenden Einsatzes, wobei
- der Einsatz beidseitig Koppelelemente aufweist, die mit Haltern verbindbar oder in diese einsetzbar und daran befestigbar sind und die Koppelelemente Lagerhalter mit senkrechten Schwenkachsen zur schwenkbeweglichen Lagerung des Endes mindestens einer sich nach vorne erstreckenden Tragstange des Einsatzes aufweisen.

Aus der DE 20 2004 020 186 U1 ist ein zusammenlegbarer Schiebewagen bekannt, in welchen beispielsweise die vorgenannten Einsätze einsetzbar sind.

Dreirädrige Schiebewagengestelle für Kinder- oder Puppenwagen sind ferner aus der US 6,533,310 B2, aus der US 6,325,406 B1, aus der DE 23 48 716 und aus der DE 202 19 252 U1 bekannt. Vierrädrige Kinderwagengestelle sind in den verschiedensten Ausführungsformen bekannt. Alle weisen am Wagengestell Trägerelemente auf, an denen mittels Befestigungselementen die Einsätze befestigbar sind.

Ausgehend vom bekannten Stand der Technik liegt der Erfindung die Aufgabe zugrunde, einen gattungsgemäßen umwandelbaren Sitz-Liegeinsatz für Kinder- oder Puppenwagen derart weiterzubilden, dass er besonders einfach aufgebaut ist und sich durch wenige Handgriffe aus einem Liegeeinsatz in einen Sportwageneinsatz umwandeln und auch als auf einen Aufstellboden aufstellbares Kinderbett oder Sitz verwenden lässt, wobei bei Nichtgebrauch ein Zusammenlegen gewährleistet sein soll. Ein weiteres Ziel der Erfindung ist es, den Einsatz derart auszubilden, dass er in Fahrgestelle unterschiedlicher Ausbildung, gleich ob drei- oder vierrädrig, eingesetzt werden kann.

Die Aufgabe löst die Erfindung durch Ausgestaltung des umwandelbaren Sitz-Liegeeinsatzes für Kinder- oder Puppenwagen gemäß der im Anspruch 1 angegebenen technischen Lehre.

Vorteilhafte Weiterbildungen der Erfindung sind in den abhängigen Unteransprüchen im Einzelnen detailliert angegeben.

Der umwandelbare Sitz-Liegeeinsatz für Kinder- oder Puppenwagen weist einen in sich stabilen Oberrahmen auf, der verschwenkbar an Adaptern und/oder mit diesen verschwenkbar im Wagengestell gelagert ist. Hierfür können Halteelemente in oder an dem Fahrgestell des Kinder- oder Puppenwagens und/oder am Rahmen vorgesehen sein. Durch die schwenkbare Befestigung an oder mit den Adaptern ist es möglich, den Rahmen beispielsweise aus einer im Wesentlichen horizontalen Position in eine Schrägstellung zu verbringen, wie sie für die Einnahme einer Sitzposition in Kindersportwagen erforderlich ist, ohne die Stabilität des Rahmens, der umlaufend beispielsweise aus Metallrohr besteht, zu verändern oder zu beinträchtigen. Es ist darüber hinaus zweckmäßig, die Schwenkgelenke der Halter, mittels derer die Seitenholme des Rahmens an den Adaptern befestigt sind, so auszubilden, dass der Rahmen mindestens aus einer horizontalen ersten Gebrauchsstellung in mindestens eine schräge Sitzstellung verbringbar und arretierbar ist, in der der Rahmen, je nach Einsetzrichtung des Einsatzes in das Kinder- oder Puppenwagengestell, von vorne nach hinten ansteigend oder von hinten nach vorne verläuft. Die Schwenklager weisen beispielsweise bekannte axial verschiebbbare Rastkupplungen auf, mit denen der Halter gegenüber dem Lagerteil in oder an dem Adapter ausrückbar und wieder einrückbar ist, um eine Schwenkbewegung in gewünschter Weise stufenförmig vornehmen zu können. Solche Rastkupplungen sind beispielsweise aus der DE 200 07 948 U1 bekannt. Mittels solcher Rastkupplungen, die seitlich am Einsatz an beiden Adaptern vorgesehen sein können, ist es möglich, den Rahmen sowohl in der horizontalen Stellung zu fixieren als auch in der Schrägstellung, die notwendig ist, um den Liegewageneinsatz in einen Sportwagensitzeinsatz umzuwandeln. Zwischenstellungen, wie Halbliegestellung, können selbstverständlich auch vorgenommen werden, zu welchem Zweck die Rastkupplung entsprechende Rasten aufweist. Durch die beidseitige Anbringung einer mit Druckknopf betätigbaren Rastkupplung der beschriebenen Art ist zudem die Sicherheit gegeben, dass das Kleinkind nicht in der Lage ist, die dafür erforderlichen Kräfte gleichzeitig aufzubringen, um den Liegeeinsatz in einen Sitzeinsatz umzuwandeln. Durch die Aufteilung des Bodens oder der eingelegten Matratze in mindestens drei Bodenteile oder drei Matratzenfelder können die einzelnen Bodenteile oder Matratzenfelder aus einer horizontalen Position gegeneinander angehoben und in Schrägpositionen verbracht werden, was grundsätzlich bereits aus der eingangs genannten Schrift bekannt ist. Die Besonderheit liegt nun darin, dass das erste, dem Fußende zugewandte Bodenteil oder Matratzenfeld in jedweder Gebrauchsposition des Sitz-/Liegeeinsatzes mindestens den Stützabschnitt für die Wadenbeine des Kleinkindes oder der Puppe bildet und das folgende Bodenteil oder Matratzenfeld den Sitzabschnitt und das hieran in Folge angelenkte dritte Bodenteil oder Matratzenfeld den Rückenlehnenabschnitt. Hierdurch wird erreicht, dass die Fußwand des Einsatzes als Fußstütze für kleinere Kinder verwendet werden kann und, falls das Kind größer wird, die Fußwand, sofern diese faltbar ausgeführt ist, in gewissem Umfang als Verlängerung zum Stützabschnitt auf diesen aufgelegt werden kann. Es sind also noch weitere Sitzausbildungen möglich. Zweckmäßig ist es dabei, die Fußwand in mindestens zwei querstreifenförmigen, biegesteifen Elementen auszuführen, um die Fußstützfunktion sicherzustellen.

Damit der Liegeeinsatz in eine flache Verstauposition gebracht werden kann, ist in weiterer Ausgestaltung der Erfindung vorgesehen, dass die Adapter an den Trägerelementen des Fahrgestells oder an einem sie verbindenden Brückenteil oder an einem Fußteil, das als Verbindungsteil ausgebildet ist, verschwenkbar gelagert sind, so dass sie entweder nach vorne oder nach hinten wahlweise verschwenkt werden können, zu welchem Zweck auch Rastkupplungen vorgesehen sind, die in einfachster Ausführung aus einem federbelasteten Sperrglied bestehen können, das abziehbar ausgeführt ist, und mit einem Rastbolzen in Löcher, die auf einem Kreisbogen angebracht sind, einrasten. Das federnde Rastelement ist dabei beispielsweise an der Außenseite des jeweiligen Adapters vorgesehen und die Lochscheibe an dem Träger des Adapters, der zur Verbindung vorgesehen ist. Die Adapter können aber auch um eine Schwenkachse, parallel zur Längsachse des Einsatzes, unter dem Boden verschwenkbar ausgeführt sein, so dass nach dem Zusammenlegen des Einsatzes die Adapter unter dem Boden verschwenkt werden können. Damit der Boden in Richtung des Rahmens angehoben werden kann, sind die Wände des Einsatzes aus textilem Material oder Folienmaterial gefertigt, das sich falten lässt. Dies ermöglicht auch, die Abhänger in die Seitenwände zu integrieren oder gesondert anzubringen. Werden beispielsweise Druckknöpfe an den Seitenwänden angebracht, so ist ersichtlich, dass durch Verstellen in andere Höhenpositionen die gewünschte Bodenausprägung und eine Gesamtanhebung des Bodens andererseits realisierbar sind. Anstelle solcher versetzbaren Druckknopfverbindungen können auch andere Verbindungselemente wie Schlaufen, Bandverbindungen oder untergreifende oder an den Seitenflächen der Bodenteile oder der Matratzenfelder angebundene Gurtsysteme zum Einsatz kommen, die allesamt an den oberen Seitenwandbereichen oder an dem Rahmen befestigt sind.

Der Rahmen kann grundsätzlich ein gestreckter, im Wesentlichen rechteckförmiger Rahmen sein. Er kann aber auch entsprechend einem gestreckten S oder stufenförmig mit schrägem Übergangsabschnitt ausgebildet sein. Diese Ausbildungsform mit den schrägen Verbindungsteilen hat den Vorteil, dass die Sitzrahmenstruktur bei Umwandlung in einen Sitzeinsatz durch die Form des Rahmens vorgegeben ist und damit die Zwischenabschnitte, die entsprechend der S-Form verlaufen, als Armlehnenteile genutzt werden können. Wird der Rahmen schräg gestellt, so ist eine Sitzrahmenstruktur sichtbar. Um aber den Sitz erst als solchen auszubilden, ist es erforderlich, dass die Bodenplatte in drei Segmente unterteilt wird, nämlich in ein Rückenlehnenteil, ein Sitzteil und ein Bein- und Fußstützteil. Diese Teile sind schwenkbeweglich miteinander verbunden. Der Sitzteil kann auch an dem Brückenteil des Adapters schwenkbeweglich angebracht sein oder als Brückenteil daran, nämlich mit dem Endabschnitt an dem Rückenlehnenabschnitt, schwenkbeweglich befestigt sein, so dass die Rückenlehne und der Fußstützteil relativ verschwenkbar sind. Über Abhänger sind die Teile mit dem Rahmen verbunden. Die Abhänger sind dabei so ausgebildet, dass sie in unterschiedliche Längen verbracht werden können, um die gewünschte Sitzausbildung der Bodenplatte zu ermöglichen. Sie können auch bestimmte Längen aufweisen. Die Abhänger können beispielsweise an dem Rahmen oder an den Teilen des Bodens an seitlichen Lageransätzen mittels Ösen befestigt sein. Die Abhänger können auch Textilgurte sein, die an dem Rahmen z.B. mittels Druckknöpfen befestigbar sind, ebenso an den Bodenteilen. Das Rückenlehnenteil kann darüber hinaus in der Schrägposition, also in der Sitz-Rückenlehnen-Position, von einem Bügel gehalten werden, der das Rückenlehnenteil untergreift und verschwenkbar an den Seitenholmen des Rahmens befestigt ist. Dieser Bügel dient bei normaler Nutzung dazu, einen biegesteifen Kopfschutz zu hintergreifen, der beispielsweise die Höhe des Liegeeinsatzes aufweisen kann. Dieses biegesteife Element gleitet beim Verbringen des Einsatzes in die Sitzposition auf der Rückenlehne entlang und liegt an dieser an, so dass kein Zwischenraum besteht, wenn die Rückenlehne hochgeschwenkt und von dem Bügel gehalten wird. Gleichzeitig wird aber auch die Schwenkachse zwischen dem Sitzteil und dem Fußstützteil über entsprechende Abhänger angehoben und der Fußstützteil nach unten abgewinkelt. Der Fußstützteil kann fest über biegesteife Verbindungselemente an dem unteren Quersteg des Rahmens angelenkt sein, so dass eine zwangsläufige Mitführung ebenfalls beim Verschwenken des Rahmens gegeben ist. Der hintergreifende Bügel kann ein starrer, beispielsweise aus einem Metallstab geformter Bügel sein, es kann aber auch ein Gurt umgelegt werden, der die Bügelfunktion erfüllt und am Rahmen oder an den oberen Enden der Seitenwände fixiert ist. Damit die Haltefunktion dabei ohne Durchhängung realisiert wird, sollte mindestens das Bodenteil, das die Rückenlehne bildet, derart versteift sein, dass es nicht durchbiegt. Zweckmäßigerweise ist dies durch einen U-förmigen oder rechteckförmigen Rahmen auf einfachste Weise realisierbar, der das Bodenteil oder das Matratzenfeld umgibt. An diesem können die Seitenwände oder auch die Bodenteilwand oder die Matratze befestigt sein. Zu diesem Zweck können Nutenstäbe und eingedrückte Kederbänder als bekannte Verbindungen vorgesehen sein. Ebenso ist es möglich, die gleiche Befestigungsart auch zur Fixierung der Seitenwände, der Kopf- und Fußwände an dem oberen Rahmen zu verwenden.

Es ist ersichtlich, dass ein Sitz-Liegeeinsatz gemäß der Erfindung durch einfaches Kippen des oberen Rahmens in zwei völlig unterschiedliche Funktionen umwandelbar ist, wobei durch Umhängen der Abhänger an den frei miteinander gekoppelten Enden des Sitz- und Fußteils unterschiedliche Schräglagen der Teile einstellbar sind und darüber hinaus der Einsatz auch noch zusammenlegbar ist, so dass er auch in Kraftfahrzeugen beim Transport verstaut oder in flachen Kartonagen verpackt werden kann. Andererseits bildet der große Rahmen eine hohe Sicherheit. Um den Einsatz in eine noch kleinere Staueinheit überführen zu können, können aber auch die Längsholme des Rahmens, beispielsweise die im Rückenlehnenbereich, nach vorne umschwenkbar sein, wie dies aus der DE 20 2004 018 180 U1 bekannt ist. In diesem Fall muss dafür Sorge getragen werden, dass die Rückenlehne, die den hinteren Teil des Bodenteils bildet, ebenfalls nach vorne umschwenkbar ist. Zweckmäßig ist es dabei, die Breite der Rückenlehne so zu dimensionieren, dass sie zwischen den Rahmen nach vorne auf den vorderen Teil geklappt werden kann. Die Seitenwände des Einsatzes bestehen aus unwattierten oder wattierten Textil- oder Folienwerkstoffen. Darüber hinaus ist der Einsatz in alle bekannten Fahrgestelle von Kinder- oder Puppenwagen einsetzbar, wenn diese mit Einrichtungen zum Befestigen an Trägerelementen ausgestattet sind, die mit den Adaptern verbindbar sind.

An Stelle der beschriebenen, relativ starren Bodenwand aus drei Flächenelementen kann der gesamte Einsatz aber auch aus einem textilen Gewebe gebildet sein, der wannenförmig ausgebildet ist und für die Dreiteilung Abnäher aufweist, die quer verlaufen. Die einzelnen Felder müssen dann Versteift werden. Ebenso ist die Gestaltung als Babyträger mit wattierten Wänden und mit im Bodenbereich eingesetzten herausnehmbaren Platte möglich, die über Quernähte bildende Scharniere gegeneinander bewegt werden können. Ferner eignen sich faltbare Matratzen für die Realisierung des Bodens. Der Boden ist an den Seiten-, Fuß- und Kopfwänden fixiert, die aus faltbarem textilem oder Folienmaterial (wattiert oder unwattiert) bestehen.

Durch entsprechende Ausbildung der Haltevorrichtung für die Adapter kann ein Kinderwageneinsatz an jede beliebige Fahrgestellausführung oder Ausführung der Halteelemente angepasst werden. Auch können die Adapter von unten einsetzbare Anpasselemente aufweisen, die austauschbar und anklippbar ausgeführt sind.

Durch die erfindungsgemäß vorgesehenen Adapter ist darüber hinaus ein auf einem Boden aufstellbarer Kindersitz oder eine Tragetasche oder ein Kinderbett realisierbar. Zu diesem Zweck brauchen die Adapter lediglich mit einem Fußgestell versehen oder an einem Fußgestell befestigt zu werden. Das Fußgestell kann ausklappbare Füße oder querverbindende Bügel aufweisen, die entsprechend gegenüber den Adaptern ausstellbar an diesen oder an Kupplungselementen befestigt sind. Die Kupplungselemente, die gleichzeitig oder ausschließlich zur Adaption in einem Kinderwagengestell vorgesehen sind, können in Reihe hintereinander angeordnete Aufnahmen für die Adapter aufweisen, um den Einsatz in Längsrichtung des Fahrgestells und damit in eine günstigere Schwerpunktposition durch Versetzen der Adapter bringen zu können. Um eine feste Verbindung zwischen Kupplungsteil und Adapter bei dieser Ausbildung zu gewährleisten, können an dem Kupplungsteil und einer Aufnahme für den Adapter ein Kräfteparallelogramm bildende, schwenkbewegliche Kupplungsstäbe angelenkt sein. Nach dem Hochziehen der Adapter kann die Aufnahme somit vom mittigen Einführschacht in dem Kupplungsteil nach vorn oder nach hinten versetzt werden.

Als besonders zweckmäßig hat es sich erwiesen, den Rahmen aus einem kopf- und einem fußseitigen Bügel herzustellen, die an den Adaptern oder an den oberen Halteelementen, die mit den Adaptern verbindbar sind, in einem definierten Abstand zueinander verschwenkbar angeordnet sind. Diese Bügel können zum Verstauen nach unten geklappt werden, wobei gleichzeitig die Bodenteile oder die Matratzenfelder gegeneinander gefaltet werden. Diese Teile, einschließlich der faltbaren Seitenwände, liegen dann zwischen den beiden Rahmenhälften. Wenn darüber hinaus die vorderen und hinteren Stützbeine des Fahrgestells aufeinander zu verschwenkt werden können, ist eine kompakte kleine Einheit des gesamten Kinderwagens oder Puppenwagens gegeben.

Die Erfindung wird nachfolgend anhand der in den Zeichnungen dargestellten Ausführungsbeispiele ergänzend erläutert.

In den Zeichnungen zeigen:
- FIG 1: in vereinfachter perspektivischer Darstellung eine Seitenansicht auf einen Sitz-Liegeeinsatz nach der Erfindung ohne Seitenbespannung und Wände,
- FIG 2: eine perspektivische Unteransicht von vorne nach hinten unter den Kinderwageneinsatz nach Figur 1 in einer Übergangsposition zum Sitz,
- FIG 3: einen Sitz-Liegeeinsatz nach den Figuren 1 und 2, umgewandelt in einen Sitzeinsatz,
- FIG 4: einen Sitz-Liegeeinsatz nach den Figuren 1, 2 und 3 in der Seitenansicht in der Funktion eines Liegeeinsatzes,
- FIG 5: einen Sitz-Liegeeinsatz in der Übergangsfunktion vom Liegesitz zum Liegebett,
- FIG 6: einen Sitz-Liegeeinsatz in der Sitzfunktion,
- FIG 7: einen Sitz-Liegeeinsatz in einer Übergangsfunktion zu einem Liegeeinsatz,
- FIG 8: ein Beispiel eines Sitz-Liegeeinsatzes mit einem geraden Rahmen und einem L-förmig abgewinkelten Unterrahmen,
- FIG 9: das in Figur 8 dargestellte Beispiel, den als Liegeeinsatz dargestellten Einsatz als Sitzeinsatz,
- FIG 10: eine Variante eines erfindungsgemäßen Einsatzes nach FIG 1 mit ausstellbaren Fangbügeln an dem Adapter,
- FIG 11: das in FIG 10 dargestellte Ausführungsbeispiel als Sitzeinsatz,
- FIG 12: ein Beispiel eines Sitzeinsatzes mit einem Rahmen aus geraden Längsholmen und Querholmen,
- FIG 13: ein Beispiel mit einem Rahmen mit in Form eines gestreckten S gebogenem Seitenrohr und leicht trapezförmigem Zuschnitt der Endabschnitte,
- FIG 14: ein Beispiel eines Rohrrahmens in S-Form mit parallelen, in langgestreckten S-Kurven gebogenen Seitenholmen,
- FIG 15: ein Beispiel eines Rahmens mit gebogenen Endabschnitten,
- FIG 16: einen zusammengelegten Rahmen mit geraden Seitenholmen in einer Perspektive mit Ausstellbügeln,
- FIG 17: das in FIG 16 dargestellte Ausführungsbeispiel in der Seitenansicht in einer Aufstellposition mit leicht schrägem Rahmen,
- FIG 18: einen Rahmen in gestreckter S-Form mit ausgestellten Füßen zum Aufstellen auf einem Boden,
- FIG 19: ein Beispiel eines Einsatzes mit einer durchgehenden faltbaren Matratze und seitlichen Tragbügeln, die die Matratze untergreifen und am oberen Rahmen schwenkbeweglich angelenkt sind,
- FIG 20: das in FIG 19 dargestellte Ausführungsbeispiel mit abgeklappten Adaptern und abgesenktem Rahmen,
- FIG 21: ein Ausführungsbeispiel, das einen Adapter mit eingesetztem Trägerelement und Sicherungshaken zeigt,
- FIG 22: ein dreirädriges Kinderwagengestell in perspektivischer Darstellung mit einem Einsatz mit Adaptern, die in Längsrichtung des Kinderwagengestells versetzbar sind,
- FIG 23: ein Kupplungsteil in Form eines Trägerelementes mit drei hintereinander angeordneten Kammern, in die die Adapter wahlweise einsetzbar sind,
- FIG 24: ein Beispiel eines nach hinten versetzten Einsatzes als Sitz,
- FIG 25: ein Beispiel für einen abklappbaren Adapter, der unter den Boden in Querrichtung des Einsatzes nach dem Zusammenfalten schwenkbar ist,
- FIG 26: ein Beispiel einer Sitzausbildung,
- FIG 27: ein Beispiel einer weiteren Sitzausbildung,
- FIG 28: ein Beispiel eines geteilten Rahmens mit nach unten abklappbaren Bügeln und
- FIG 29: den in FIG 28 dargestellten Rahmen im abgeklappten Zustand.

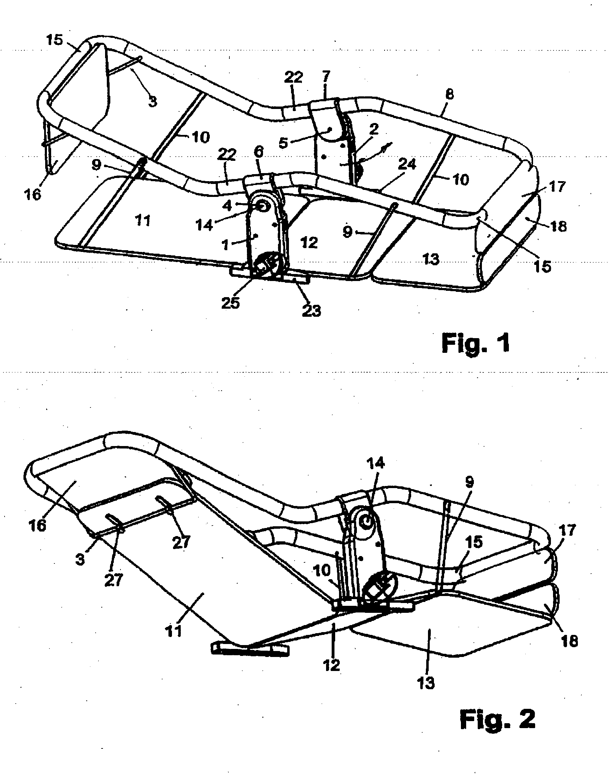

In den Figuren 1, 2 und 3 ist ein Sitz-Liegeeinsatz für Kinder- oder Puppenwagen dargestellt, der einen in gestreckter S-Form ausgebildeten Rahmen 8 aufweist, der seitliche Rahmenholme und Querstege 15 an der Kopf- und Fußseite aufweist. Für den Rahmen kann ein Rohr aus Metall verwendet werden. Dieses Rohr wird entsprechend der Darstellung gebogen und weist spiegelbildlich S-förmig gestreckt verlaufende und miteinander über Querholme verbundene Seitenholme auf. Die etwa mittig vorgesehenen, schräg verlaufenden Abschnitte 22 des Rahmens 8 bilden, wie später noch aufgezeigt wird, die Oberseite von Armlehnen. An den Zwischenabschnitten 22 sind Halter 6 und 7 befestigt, die an Schwenkgelenken 4 und 5 an Adaptern 1 und 2 angelenkt sind. Die Halter 6 und 7 sind in verschiedene Winkelpositionen verbringbar und in diesen Positionen arretiert. Hierzu kann beispielsweise ein über eine Drucktaste betätigbares Rastschwenkgelenk integriert sein, das durch Ausrasten eines Verbindungszahnkranzes aus zwei Zahnkränzen ein Verschwenken ermöglicht, wie dies beispielsweise ein Rastgelenk gemäß der DE 200 07 948 U1 angibt. Es ist ersichtlich, dass der Rahmen aus der dargestellten Position auch nach links unten verschwenkt werden kann, um so einen nahezu gleichförmig gestalteten Liegeeinsatz schaffen zu können. Zu diesem Zweck ist an der Kopfseite ein biegesteifes Element 16 vorgesehen, das von einem Bügel 3 hintergriffen wird, der an den seitlichen Holmen des Rahmens 8 angelenkt ist. Das biegesteife Element 16 ist verschwenkbar am Querholm befestigt. An der Fußseite sind zwei miteinander gelenkig verbundene biegesteife Elemente 17 und 18 vorgesehen, die durch gummierte oder textile Zwischenteile auf Abstand zueinander gebracht werden können, gegeneinander sich aber falten lassen. Dies erfolgt beim Zusammenlegen zwangsläufig.

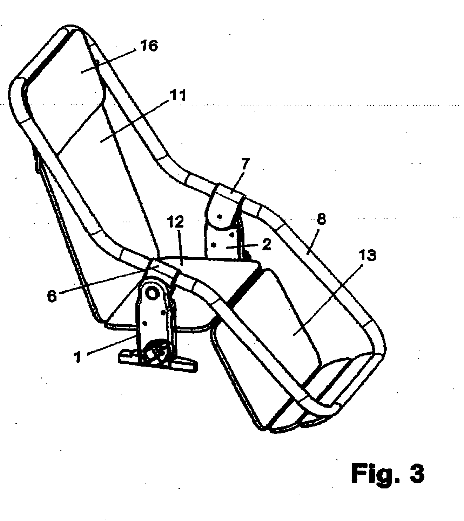

Zwischen den beiden Adaptern 1 und 2, die auch über ein nicht dargestelltes Brückenteil miteinander verbunden sein können, ist ein Boden eingelegt, der aus drei Teilen besteht, nämlich einem Rückenteil 11, einem Sitzteil 12 und einem Beinstützteil 13. Die Teile sind jeweils relativ verschwenkbar gegeneinander und miteinander verbunden, wie aus den Figuren 2 und 3 ersichtlich ist. Die Adapter 1 und 2 weisen ferner untenseitig Kupplungselemente 23, 24 auf, mit denen die Adapter an nicht dargestellten Halteelementen an dem Kinderwagen- oder Puppenwagenfahrgestell aufgesteckt oder anmontiert werden können. Diese Kupplungselemente 23, 24 können auch anders ausgebildet sein als dargestellt. Sie können beispielsweise auch länglich ausgebildet sein, so dass sie mit seitlichen, im Abstand zueinander angeordneten Arretierungsansätzen in bekannter Weise auch in Ausnehmungen auf Längsträgern im Fahrgestell einsetzbar und hierin verankerbar sind. Als weitere Besonderheit ist vorgesehen, dass die Adapter 1 und 2 auch um untere Schwenklager 25 verschwenkbar sind. Diese Lager sind beispielsweise an den Kupplungselementen 23, 24 vorgesehen. Zur Arretierung können Federrasten vorgesehen sein, die mit Arretierungsbolzen in ein Lochraster eingreifen, das auf einer Kreisbogenscheibe innerhalb des Adapters an einer Wand des Kupplungselementes 23, 24 angebracht ist. Dadurch ist es möglich, die Adapter selbst entweder nach vorne oder nach hinten verschwenken zu können, so dass der Rahmen automatisch nach unten in Richtung auf die Bodenplatte zu bewegt wird. Damit kann dieses Gestell auch in einfacher Weise zusammengelegt werden. Die beiden biegesteifen Elemente 17, 18 falten sich bei diesem Vorgang automatisch, auch kommt das lose hängende biegesteife Element 16 an der Kopfseite zur Auflage an der Oberseite des Bodenteils 11 und wird hierauf verschoben. Die vorgesehenen Abhänger 9 und 10 können verstellt werden bzw. falten sich, da sie in der Regel aus Bändern oder Gurten bestehen und z.B. Druckknöpfe 38 zum Befestigen am Rahmen 8 oder an Druckknopfgegenelementen an der nicht dargestellten Wand aus textilem Material aufweisen, die am Rahmen 8 befestigt ist und den Boden aus den Teilen 11, 12 und 13 untergreift. Das gesamte Gebilde kann also in eine niedrige Verstauposition verbracht werden. Andererseits ermöglicht der Aufbau aber auch eine Umwandlung des als Liegeeinsatz in Figur 1 dargestellten Einsatzes. Zu diesem Zweck muss das Rückenlehnenteil 11 hochgestellt werden. Es wird dabei von dem Bügel 3 untergriffen, der in normaler Funktion das biegesteife Element 16 hintergreift. Rasthaken 27 sichern den Querteil des Bügels 3 an der Rückseite des Rückenlehnenelementes 11.

Wie aus Figur 2 ferner ersichtlich ist, liegt dabei das biegesteife Element 16 auf der Oberseite des Rückenlehnenteils 11 an und kann darauf gleiten, um so einen Längenausgleich bei unterschiedlichen Verschwenkradien vornehmen zu können, die dadurch gegeben sind, dass zum einen der Rahmen um die aus den Drehgelenken 4 und 5 gebildete Gelenkachse und zum anderen das Rückenlehnenteil 11 an dem Verbindungsgelenk zwischen diesem Teil und dem Sitzteil 12 verschwenkbar sind. Durch die Abhänger 9 und 10 kann auch die Höhe zwischen Bodenteil und Rahmen so eingestellt werden, wie sie gewünscht ist. Die freihängenden Teile 11,12 und 13 bilden dabei die dargestellte Liegeausführung, so dass beispielsweise ein Kleinkind in dieser Position, in der der Rahmen etwas nach rechts gekippt ist, ebenfalls schlafend in einem Kinderwagen transportiert werden kann. Soll das Kleinkind jedoch aufrecht sitzen, so ist durch einfaches Verschwenken des Rahmens nach rechts die Position einnehmbar, die in Figur 3 dargestellt ist. Der Einsatz ist dann ein normaler Sitz mit Armlehnenverlauf. Zur seitlichen Sicherung sind zwischen Rahmen und Bodenteil nicht dargestellte textile Wandelemente vorgesehen, die an dem Rahmen und den Bodenteilen befestigt sind.

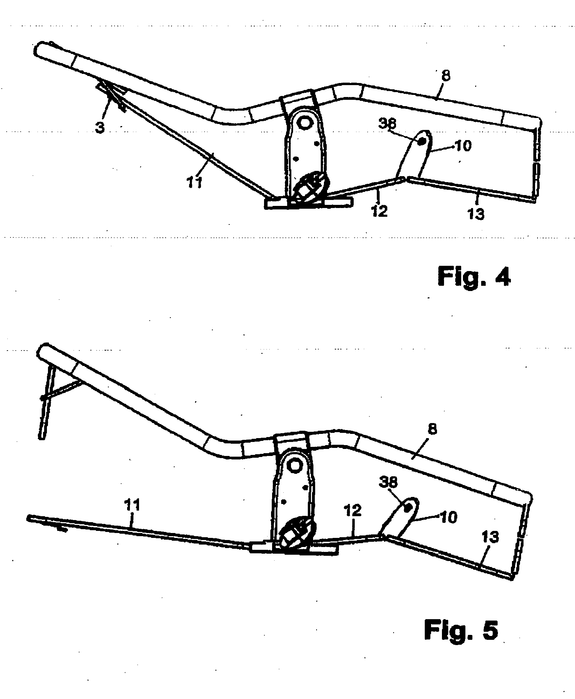

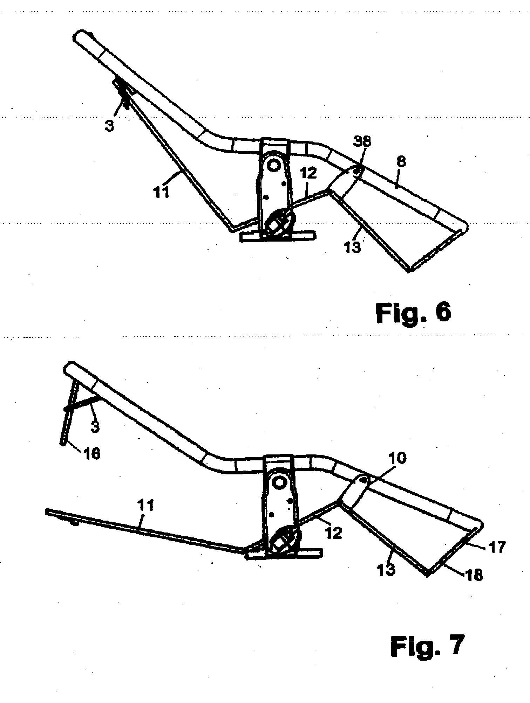

Durch Rückschwenken und entsprechendes Arretieren ist wiederum ein Liegeeinsatz auf einfache Weise herstellbar. Figuren 4, 5, 6 und 7 veranschaulichen in einer Seitenansichtsdarstellung die unterschiedlichen Positionen und Funktionen. Figur 4 zeigt eine Zwischenposition in Form einer Liegeposition mit eingezeichneten Abhängern 10, die zum Beispiel bandförmig ausgebildet sind und sowohl das Bodenteil 12 als auch das Bodenteil 13 miteinander verbinden und an dem Rahmen 8 zum Beispiel mittels Druckknöpfen befestigbar sind. An Stelle solcher bandfömiger Abhänger kann aber auch vorgesehen sein, dass die aus textilem Stoff bestehenden Seitenwände unmittelbar als Abhänger und zwar als auch verstellbare genutzt werden können. Beispielsweise kann durch Faltung der Seitenwand dafür Sorge getragen werden, dass mittels Druckknöpfen 38 diese verkürzt oder verlängert werden kann. Auch können bandförmige Abhänger in den Stoff eingenäht sein, die dann mit in einem bestimmten Raster angeordneten Druckknopfelementen jeweils verbindbar sind, um so je nach Stellung des Rahmens eine gewünschte Anhebung oder Absenkung der einzelnen Bodenteile 11, 12, 13 zu bewirken. Das Rückenlehnenteil 11 ist, wie aus Figur 2 ersichtlich, schräg gestellt. In Figur 5 ist eine Vorstufe dargestellt bzw. eine Rückführung des Bodenteiles in die Horizontale, also eine Umwandlung in einen Liegeeinsatz. Die dafür erforderlichen längeren Abhänger sind der Einfachheit halber nicht dargestellt. Figur 6 zeigt eine schräge Sitzposition, die noch zusätzlich hochgestellt werden kann, wie dies aus Figur 3 ersichtlich ist. Figur 7 zeigt eine Zwischenposition zur Bildung dieser Sitzposition, die in Figur 6 dargestellt ist.

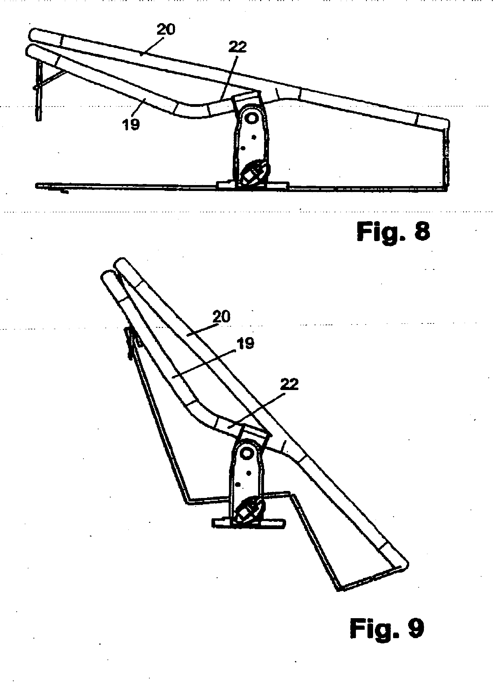

Die Ausführungsbeispiele in den Figuren 8 und 9 zeigen, dass der Rahmen nicht nur als gestrecktes S ausgebildet sein kann, sondern auch als ein gradliniger Oberrahmen, oder dass einzig und allein ein solcher Oberrahmen vorgesehen sein kann. Zu diesem Zweck wäre bei einer solchen, nicht dargestellten Ausführung der Halter entsprechend anzupassen. Der Oberrahmen 20 im Ausführungsbeispiel ist geradlinig ausgebildet. An ihm befindet sich ein Unterrahmen 19, der nicht zwingend notwenig ist, um die Funktionen herzustellen. Dieser Unterrahmen 19 ist als gestrecktes L mit kurzem Abschnitt 22, ähnlich wie ein Hockeyschläger, ausgebildet und im Übrigen genauso an den Haltern angebunden wie der Rahmen 8 in den vorher beschriebenen Figuren, so dass auch mittels eines solchen Rahmens 19, 20 und 21 eine Umwandlung aus einem Liegeeinsatz in einen Sitzeinsatz auf einfache Weise möglich ist. Da auch hier die Funktionen die gleichen sind wie die in den vorhergehenden Figuren, werden diese nicht mehr ergänzend beschrieben.

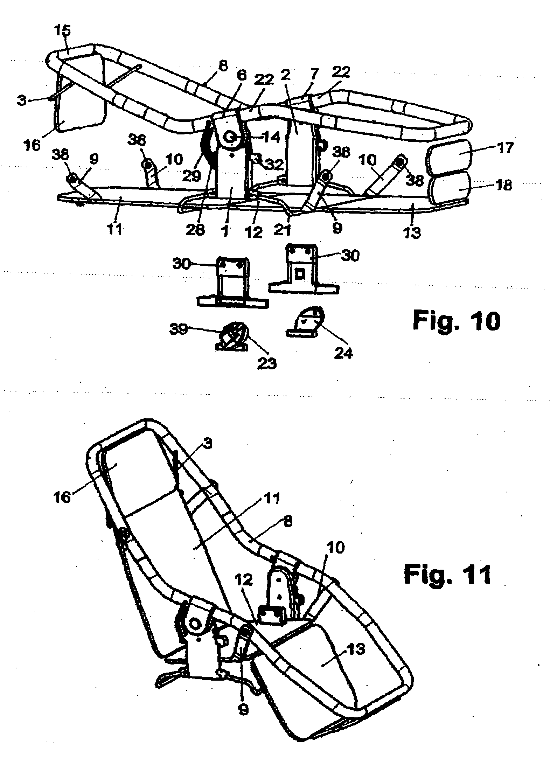

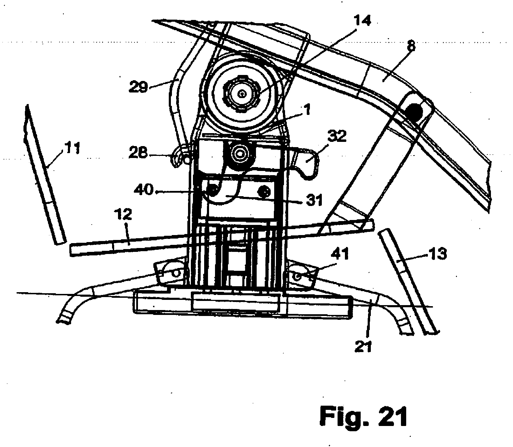

In Figur 10 ist ein Ausführungsbeispiel eines Einsatzes nach der Erfindung dargestellt, das im Wesentlichen baugleich ist mit dem Beispiel in Figur 1. Der Rahmen 8 weist oben- wie auch untenseitig einen trapezförmigen Verlauf des Rohrmaterials auf, so dass Fuß- und Kopfende nahezu gleichförmig, trapezförmig verlaufend ausgebildet sind. An dem kopfseitigen Rahmen 8 sind an den Seitenholmen beidseitig die Schenkel des Bügels 3 schwenkbar befestigt. Der Bügel 3 hintergreift das schwenkbeweglich an dem Querholm 15 befestigte Kopfelement 16, ein biegesteifes, z. B. auch gepolstertes Element. An dem Bodenteil 11, der den Rücken in der Aufstellposition gemäß Figur 11 bildet, sind seitlich bzw. untergreifend Abhänger 9 und 10 mit Druckknöpfen 38 vorgesehen. Diese Druckknöpfe werden auf nicht dargestellte Rastgegenelemente an dem Holm, wie aus Figur 11 ersichtlich, aufgedrückt, wenn der Rahmen 8 in die Sitzposition verbracht wird. Weist der Einsatz textile Seitenwände auf, so können die Druckknopfgegenelemente auch an dem Stoff der Seitenwände befestigt sein. Das Beispiel zeigt ferner, dass bodenseitig biegesteife Elemente 17 und 18 vorgesehen sind, die das Fußelement bilden. Das untere biegesteife Element 18 ist auch an dem Rand des Bodenteils 13, das eine Beinstütze bildet, angelenkt. An dem sich anschließenden Bodenteil 12, das das Sitzelement bildet, sind vorderseitig Abhänger 9 und 10 ebenfalls beispielsweise untergreifend befestigt, die mit ihren Enden und darin befindlichen Druckknöpfen 38 an nicht dargestellten Druckknopfgegenelementen der Außenseite der Seitenholme des Rahmens 8 oder, wie vorher schon beschrieben, auch an Druckknopfgegenelementen befestigbar sind, die sich an den textilen, nicht dargestellten Seitenwänden befinden. Durch Kippen des Rahmens 8 in die in Figur 11 dargestellte Position wird erreicht, dass der Sitz-Liegeeinsatz nach Figur 10 zu einem Sitzeinsatz wird, in das ein Kleinkind hinein gesetzt werden kann. In dieser Position greift das biegesteife Element 16, nämlich das Kopfelement, gleitend auf das Bodenteil 11 auf. Der Bügel 3 hintergreift dabei die Rückseite des Bodenteils 11, das zur Rückenlehne wird. Das Befestigen der unteren Abhänger 9 und 10 an den Holmen bewirkt die Sitzausformung der gelenkig miteinander verbundenen Bodenteile 11, 12 und 13. Die Ausführung gemäß Figur 10 zeigt ferner, dass die Adapter 1 und 2 obenseitig die verschwenkbaren Halter 6 und 7 aufweisen, mit denen sie an den Abschnitten 22 des Rahmens 8 befestigt sind. Diese Halter 6 und 7 sind schwenkbar an den Adaptern 1 und 2 befestigt. Hier kann beispielsweise eine axial verschiebbare Kupplung vorgesehen sein, die mittels Drucktaster 14 oder eines anderen Arretierungshebels in einer Raststellung feststellbar und nach Lösen aus dieser wieder verschwenkbar ist, so dass beispielsweise die aus Figur 11 ersichtliche Sitzstellung oder jede beliebige Zwischenstellung einnehmbar ist. In die hohlen Adapter 1 und 2 können Trägerelemente 30 rastend von unten eingeschoben werden. Diese Trägerelemente 30 können an Kupplungselementen 24 befestigt sein oder Aufnahmen aufweisen, in die diese Kupplungselemente 23 einführbar sind. Die Kupplungselemente sind als Schwenklager ausgebildet und weisen einen Arretierungshebel 39 auf, der federbelastet ist und beim Verdrehen des Kupplungselementes in die verschiedenen Verdrehstellungen in Rastbohrungen mittels eines Rastansatzes greift. Die Befestigung des Trägerelementes 30 an bzw. in den Adaptern 1 und 2 erfolgt mittels eines aus Figur 21 ersichtlichen Sicherungshakens 31, der federbelastet ist und über einen Betätigungsschenkel 32 verschwenkt werden kann, so dass er, wie aus Figur 21 ersichtlich ist, einen Sicherungsbolzen 40 hintergreifen kann, der an beiden Seiten des Trägerelementes 30 angebracht ist, so dass durch Drehung das gleiche Teil auch an der anderen Seite eingesetzt und mittels spiegelbildlich angeordneter Sicherungshaken 31 arretierbar ist. Figur 21 zeigt ferner in schematischer Darstellung die Ausbildung der Rastkupplung mit Drucktaster 14. Des Weiteren ist der aus Figur 10 und 11 ersichtliche Fangbügel 29 dargestellt, der beim Verschwenken den an der Vorderseite mindestens einer der Adapter 1 und 2 angebrachten Haken 28 untergreift, so dass beim Verschwenken des Rahmens 8 ein unbeabsichtigtes Verstellen um einen bestimmten Winkel vermieden wird. Der Fanghaken 29 liegt mit seinem unteren Ende an der Stirnseite des Adapters 1 an und wird beim Verschwenken automatisch hinter den Haken 28 gezogen. Dies hat den Vorteil, dass kein unbeabsichtigtes Verschwenken des Rahmens ermöglicht wird und erst eine Mittelposition eingenommen wird, um dann ein weiteres Verschwenken zu ermöglichen, wenn die Rastkupplung, die durch den Drucktaster 14 betätigt wird, ausgerückt ist und ein Verschwenken ermöglicht wird.

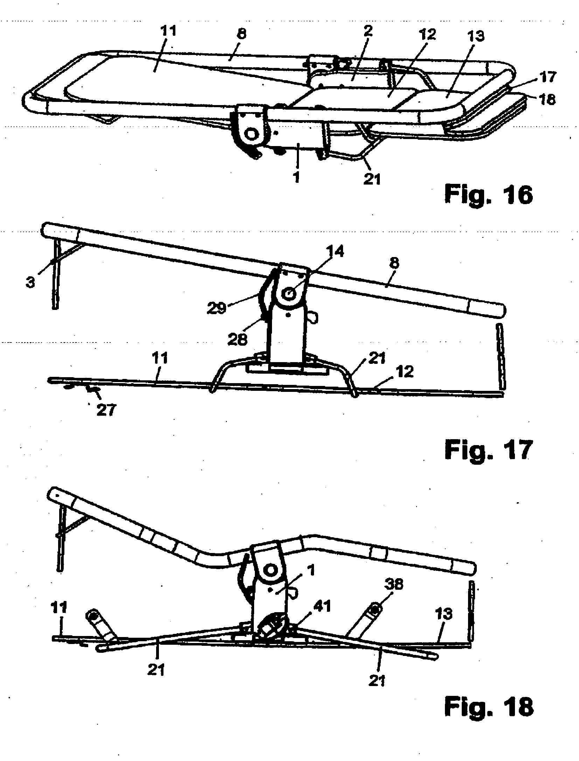

Des Weiteren ist aus den Darstellungen in Figuren 10, 11 und 21 ersichtlich, dass an dem Adapter 1 bzw. an dem Adapter 2 die seitlichen Schenkel eines Bügels 21 angelenkt sind und dass an den Adaptern seitlich vorstehend die Schwenkgelenke so ausgebildet sind, dass die Bügel 21 in der dargestellten Spreizposition aufstellbar und, falls der Einsatz in eine Verstaustellung zusammengeklappt werden soll, nach unten klappbar sind. Zuvor werden das Trägerelement 30 von dem Kupplungsstück 23 bzw. 24 abgezogen, die beiden Bügel nach unten verschwenkt und danach der Adapter 1 in eine im Wesentlichen horizontale Position verschwenkt, so dass der Adapter mit den in Verlängerung vorgesehenen zusammengeklappten Bügeln 21 beispielsweise die aus Figur 16 ersichtliche Position einnehmen kann. Es ist aber auch möglich, die Bügel an die unteren Enden der Trägerelemente anzulenken, um die Fußstellungswirkung ebenfalls zu erzielen.

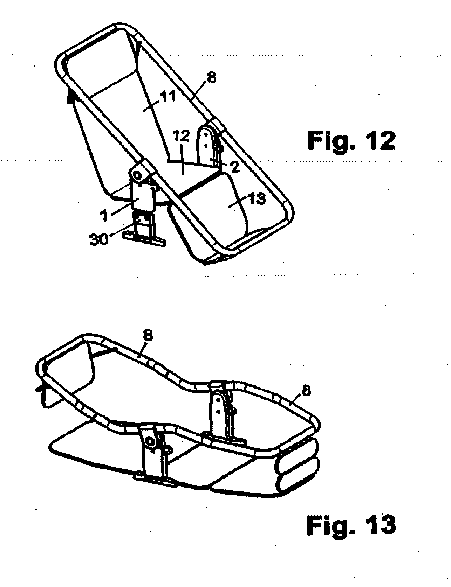

Aus Figur 12 ist ein Einsatz ersichtlich, wobei der Rahmen 8 als geradliniger Rahmen ausgebildet und in etwa rechteckförmig und in eine solche Verschwenkposition verbracht ist, in der die Bodenteile 11, 12 und 13 einen Sitz bilden. Das Beispiel zeigt auch, dass die Adapter 1 und 2 von den Trägerelementen 30 abziehbar sind.

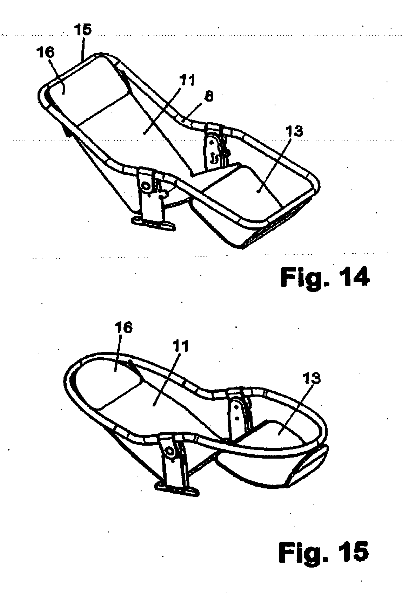

Figur 13 zeigt ein weiteres Ausführungsbeispiel eines Einsatzes als Liegeeinsatz mit einem Rahmen 8, der kopfseitig, in etwa trapezförmig und fußseitig ebenfalls etwa trapezförmig gebogen ist. Im Übrigen weist er den gleichen Aufbau auf wie der Rahmen nach Figur 10, so dass hierdurch nur verdeutlicht wird, dass der Rahmen verschiedene Prägungen aufweisen kann. Dasselbe trifft auch für den mit S-förmigen Seitenholmen ausgebildeten Rahmen in Figur 14 zu. Figur 14 zeigt darüber hinaus, dass eine Zwischenkippstellung eingenommen werden kann, also eine Zwischenposition zwischen Liege- und Sitzposition, wobei aus dieser Darstellung auch ersichtlich ist, dass die Kopfplatte 16 den sich durch die unterschiedlichen Schrägstellungen ergebenden Zwischenraum zwischen Bodenteil 11 und dem oberen Querholm 15 überbrückt. Figur 15 zeigt, dass der Rahmen auch gebogen an seinen Enden ausgeführt sein kann, dies auch bei S-förmig gestreckter Ausbildung der Längsholme. Die Funktionen sind die gleichen wie beschrieben. Figur 16 zeigt den in Figur 12 in der Sitzposition dargestellten Rahmeneinsatz in der Verstauposition, bei der die Adapter 1 und 2 parallel zu den Längsholmen des Rahmens 8 verschwenkt sind. Die Fußbügel 21 bilden dabei eine Verlängerung. Die Bodenteile 11, 12 und 13 schieben sich förmlich ineinander. Die fußseitig vorgesehenen biegesteifen Elemente 17 und 18 sind gefaltet, so dass das Gesamtgebilde einschließlich des nicht dargestellten, textilen Mantels zusammengelegt werden kann. Figur 17 zeigt hingegen eine Aufstellposition mit schräggestelltem Rahmen 8 und den Haken 28 hintergreifendem Fangbügel 29, aus der ersichtlich ist, dass erst durch eine Zweihand-Bewegung nach dem Schwenken des Fangbügels 29 durch gleichzeitiges Drücken auf den Drucktaster 14 der Rastkupplung ein Verschwenken ermöglicht wird. Das Beispiel zeigt ferner, dass die Fußbügel 21 die Bodenteile 11 und 12 untergreifen, so dass diese eine gerade Fläche bilden. Des Weiteren ist ein Rasthaken 27 an der Unterseite des Bodenteils 11 angebracht, der in der Aufstellposition des Sitzes den Bügel 3 übergreift. Figur 18 zeigt ein weiteres Ausführungsbeispiel mit einem S-förmigen Rahmen und zusätzlich weit ausstellbaren Füßen 21, die seitlich mit ihren Schenkeln über Schwenkgelenke 41 an den Stirnflächen der Adapter 1 und 2 angelenkt sind. Diese Füße 21 können ebenfalls als Bügel ausgebildet sein. Sie bieten eine höhere Aufstellsicherheit und untergreifen die Bodenteile 11 und 13, so dass das so gebildete Bett beispielsweise auf einem Tisch aufgestellt werden kann. Die Seitenwände, die aus textilem, faltbaren Material bestehen, sind nicht dargestellt. Diese Seitenwände bzw. Stirn- und Kopfwände folgen den verschiedenen Gebrauchspositionen und können verkürzt oder verlängert werden.

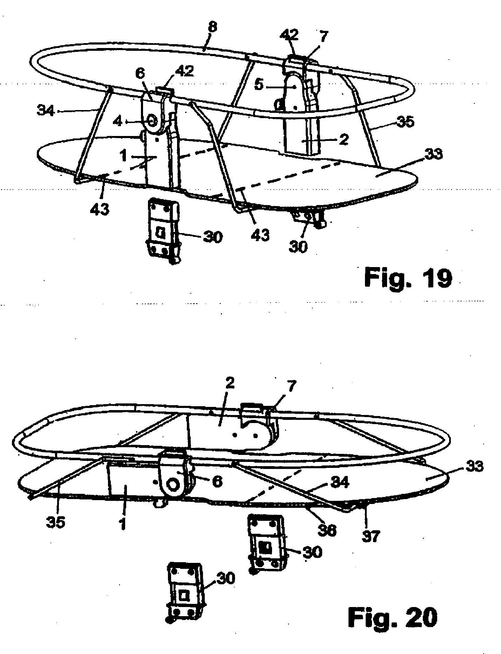

In den Figuren 19 und 20 ist ein weiteres Ausführungsbeispiel eines erfindungsgemäß ausgebildeten Einsatzes dargestellt. Dieser besteht aus einem Rahmen 8, der kopfseitig als Oval und fußseitig rechteckförmig mit abgerundeten Ecken ausgeformt ist. An dem Rahmen sind die Halter 6 und 7 befestigt. Diese Halter 6 und 7 können verschiebbare Rastelemente 42 aufweisen, die gegen die Kraft einer Feder in den Haltern 6 und 7 gelagert sind und mit Rastansätzen in ein Rastloch eines Rastkranzes eingreifen, der auf einer Mantelbahn, die in einem bestimmten Radius zu den Schwenkgelenken 4 und 5 angeordnet ist, in den verschiedenen Schrägstellungen einrastet. Die Adapter 1 und 2 sind ferner auf die Trägerelemente 30 aufsteckbar und in beschriebener Art und Weise darin sicherbar.

Als Besonderheit bei dieser Ausführung sind Spannbügel 34 und 35 vorgesehen, die die Matratze 33 untergreifen und außenseitig an den nicht dargestellten textilen oder aus Folie bestehenden (gepolsterten oder ungepolsterten) Wänden verlaufen. Dadurch ist ein Zusammenlegen der Wanne ohne Anheben einer Matratze 33 oder auf einer stabilisierenden Bodenplatte aufgelegten Matratze möglich, dies auch dann, wenn der Rahmen 8 eine ovale Längsstruktur aufweist. Ferner besteht keine Verletzungsgefahr durch die Spannbügel 34, 35. Der Spannbügel 34 ist mit dem unteren Abschnitt unterhalb der um Faltkanten 43 faltbaren Matratze 33 an der Unterseite geführt und rastet in mindestens den beiden Endpositionen, nämlich der Aufstellposition gemäß Figur 19 in das Rastelement 36 und in der in Figur 20 dargestellten zusammengeklappten Position in das Rastelement 37, ein. Die faltbare Matratze kann auch von einer untergelegten durchgehenden Bodenplatte gestützt sein, die beispielsweise auswechselbar mitgeliefert wird. An dieser Bodenplatte können dann die entsprechenden Führungen für die Spannbügel 34, 35 angebracht sein. Diese Rastelemente 36, 37 können beispielsweise durch eine bodenseitige Lagestange gebildet sein, die in den Endabschnitten jeweils Lagerstellen aufweist, in die der Spannbügel 34 einrastet. Zum Zwecke des Zusammenlegens in die aus Figur 20 ersichtliche Position wird der Einsatz mit den Adaptern 1 und 2 von den Trägerelementen 30 abgezogen und nach Lösen der Rastkupplung zwischen den Haltern 6 und 7 und den Adaptern verschwenkt, so dass die Spannbügel 34 und 35 in eine äußere Schrägstellung verbracht werden können, um den Einsatz zusammenlegen zu können. Dieser zusammengelegte Zustand ist aus Figur 20 ersichtlich.

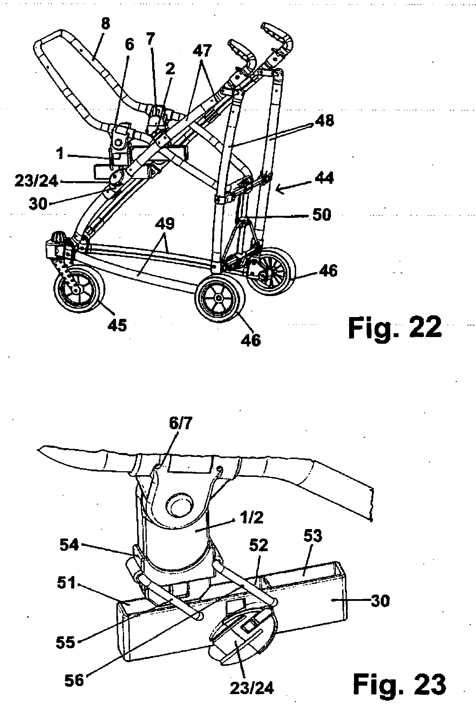

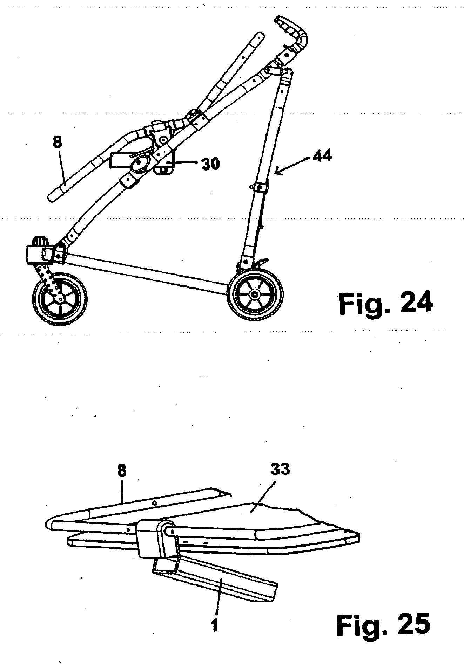

Figur 22 zeigt in perspektivischer Darstellung ein Kinderwagengestell 44 eines dreirädrigen Kinderwagens mit einem Vorderrad 45 und hinteren Rädern 46. Das Gestell besteht im Wesentlichen aus vorderen Schrägholmen 47 und hinteren Stützholmen 48, die miteinander schwenkbeweglich verbunden und untenseitig an Bodenholmen 49 angelenkt sind, wodurch das Gestell zusammenlegbar ist. Der aufgestellte Zustand wird durch ein Spreizgestell 50 gesichert. Bei dem Kinderwagengestell 44 handelt es sich um eine bekannte Ausführung. Die Erfindung selbst ist bei jedem anderen drei- oder vierrädrigen Fahrgestell ebenfalls anwendbar. An den Schrägholmen 47 sind Kupplungselemente in Form von Trägerelementen 30 angebracht, in die Kupplungsstücke 23, 24 integriert oder einsetzbar sind. Das Trägerelement weist drei hintereinander angeordnete Lagerkammern 51, 52, 53 zur Aufnahme der seitlich vorgesehenen Adapter 1,2 auf, wie aus Figur 23 ersichtlich ist. Die Adapter 1,2 sind jeweils in einem versetzbaren Halter 54 geführt, der über ein Kräfteparallelogramm bildende Kopplungsstangen 55, 56 an dem Trägerelement 30 befestigt ist. In Figur 22 ist die Mittenposition dargestellt, aus der ersichtlich ist, dass der Rahmen 8 über die Halter 6, 7 an den Adaptern 1,2 verschwenkbar angelenkt ist und die Adapter sich über den mittigen Lagerkammern 52 befinden. Figur 23 zeigt eine nach vorne in die Lagerkammer 51 versetzte Position der Adapter 1, 2. Figur 24, in der das Kinderwagengestell 44 in der Seitenansicht abgebildet ist, zeigt den Rahmen 8 bei Verwendung des Einsatzes als Sitzeinsatz mit Blickrichtung in Fahrtrichtung. Die Adapter sind in die hinteren Lagerkammern 53 des Trägerelementes 30 eingesetzt, wodurch der Schwerpunkt nach hinten in Richtung der hinteren Räder 46 verschoben ist.

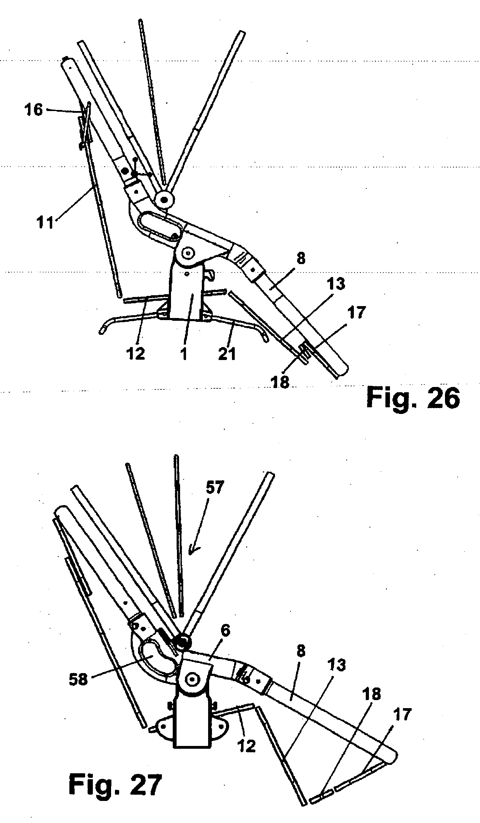

In Figur 25 ist in vereinfachter Darstellung ein Beispiel eines verschwenkbaren Adapters 1 dargestellt. Dieser verschwenkbare Adapter ist um eine parallel zur Längsachse des Einsatzes verlaufende Achse derart verschwenkbar, dass der Adapter bei angehobenem Boden bwz. angehobener Matratze 33 unter diesen bzw. diese geschwenkt werden kann. Sicherungs- und Arretierungsmittel für den Adapter 1 sind der Übersichtlichkeit halber nicht dargestellt. In den Figuren 26 und 27 sind schematisch und vereinfacht Einsätze als aufstellbare Babysitze in Anlehnung an Figur 11 dargestellt, die verdeutlichen, dass der Sitz unterschiedliche Neigungswinkel und Funktionen einnehmen kann. Das Bodenteil 13, das als Beinstützteil vorgesehen ist, verläuft durch entsprechende Verkürzung der Abhänger in einem flacheren Winkel zum Bodenteil 12, dem Sitz, als in Figur 27 dargestellt. Dies ist durch Faltung der biegesteifen Fußelemente 17, 18 gegeneinander realisiert, während Figur 27 einen steileren Winkel des Bodenteils 13 aufweist und die biegesteifen Fußelemente 17, 18 als Fußstütze nutzt. Die Rückenlehne, die aus dem Bodenteil 11 und dem Kopfelement 16 gebildet ist, kann dabei ebenfalls in der Schrägstellung verändert werden. Die Zeichnungen zeigen ferner ein am Rahmen 8 befestigtes Faltdach, das an dem Halter 6 bzw. dem gegenüberliegenden Halter 7, der nicht sichtbar ist, angelenkt ist. Der Halter 6 bzw. 7 weist ferner einen Tragegriff zum leichteren Umsetzen des Kindersitzes oder bei Nutzung als Kindertragetasche auf. Im übrigen ist die gleiche Struktur gegeben, wie bei dem Beispiel in den Figuren 10 und 11.

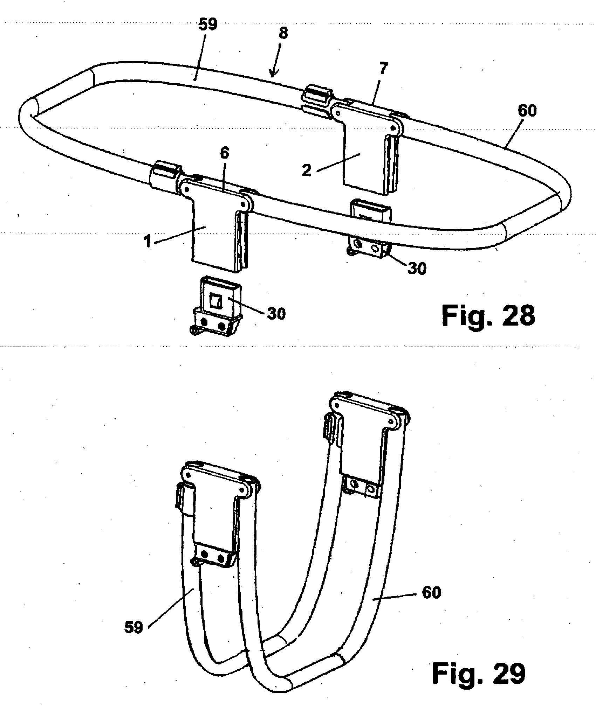

Die Figuren 28 und 29 zeigen ein Beispiel eines Rahmens 8, der aus einem Kopfbügel 59 und einem Fußbügel 60 besteht, die an den Haltern 6, 7, die integraler Bestandteil der Adapter 1, 2 sind, schwenkbeweglich und mindestens in der aufgestellten Position, die in Figur 28 dargestellt ist, arretiert sind. Nach Lösen der nicht dargestellten Arretierung lassen sich der Kopf- und der Fußbügel nach unten klappen. Es ist dadurch ersichtlich, dass der Einsatz auch gegenüber den Anbindungspunkten an den Haltern 30 in einem Kinderwagengestell 44 zusammenklappbar ist und nur ein geringer Verstauraum benötigt wird.

### Bezugszeichenliste

- 1: Adapter
- 2: Adapter
- 3: Bügel
- 4: Schwenkgelenk
- 5: Schwenkgelenk
- 6: Halter
- 7: Halter
- 8: Rahmen
- 9: Abhänger
- 10: Abhänger
- 11: Bodenteil (Rücken)
- 12: Bodenteil (Sitz)
- 13: Bodenteil (Beinstütze)
- 14: Drucktaster (Arretierungshebel)
- 15: Querholm
- 16: biegesteifes Element (Kopfelement)
- 17: biegesteifes Element (Fußelement)
- 18: biegesteifes Element (Fußelement)
- 19: Unterrahmen
- 20: Oberrahmen
- 21: Fußbügel
- 22: Abschnitt
- 23: Kupplungsstück
- 24: Kupplungsstück
- 25: Schwenklager
- 26: Schwenklager
- 27: Rasthaken
- 28: Haken
- 29: Fangbügel
- 30: Trägerelement
- 31: Sicherungshaken
- 32: Betätigungsschenkel
- 33: Matratze
- 34: Spannbügel
- 35: Spannbügel
- 36: Rastelemente
- 37: Rastelemente
- 38: Druckknopf
- 39: Arretierungshebel
- 40: Sicherungsbolzen
- 41: Schwenkgelenk
- 42: Rastelemente
- 43: Faltkanten
- 44: Kinderwagengestell
- 45: Vorderrad
- 46: Hinterrad
- 47: Schrägholm
- 48: Stützholm
- 49: Bodenholm
- 50: Spreizgestell
- 51: Lagerkammer
- 52: Lagerkammer
- 53: Lagerkammer
- 54: Halter
- 55: Kopplungsstange
- 56: Kopplungsstange
- 57: Faltdach
- 58: Tragegriff
- 59: Kopfbügel
- 60: Fußbügel

## Patentansprüche

1. Umwandelbarer Sitz-Liegeeinsatz für Kinder- oder Puppenwagen mit einem oberseitigen umlaufenden Rahmen (8), an dem Abhänger (9, 10) für die Befestigung einen Boden mit querverlaufende Faltachsen bildender biegesteifer Bodenteile (11, 12, 13), die miteinander gelenkig verbunden sind, oder einer faltbaren, querverlaufende Faltachsen aufweisenden Matratze (33) mit versteiften Feldern, Einrichtungen zum schwenkbaren Befestigen des Rahmens (8) an Trägerelementen in oder an dem Fahrgestell des Kinder-oder Puppenwagens, wobei durch Verbringen des Rahmens (8) aus einer im Wesentlichen horizontalen Lage in mindestens eine Schräglage der Sitz-Liegeeinsatz aus der Gebrauchstellung als Liegeeinsatz in eine Gebrauchsstellung als Sitzeinsatz umwandelbar ist, **dadurch gekennzeichnet,**
- **dass** an den Seitenholmen des Rahmens (8) nach unten sich erstreckende, in etwa in der Schwerpunktachse des Rahmens (8) liegend oder zur Kopfseite des Rahmens verschoben, Adapter (1, 2) vorgesehen sind, die direkt oder über Halter (6, 7) hieran und in oder an dem Fahrgestell oder an einem auf einen Aufstellboden aufstellbaren Fußgestell mit der Unterseite befestigbar sind, und
- **dass** die Adapter (1, 2) oben- und/oder untenseitig in verschiedene Neigungswinkel einstellbar sind oder der Rahmen (8) in verschiedene Neigungswinkel gegenüber den Adaptern (1, 2) einstellbar ist,
- wobei bei horizontaler Lage des Rahmens (8) ein im Wesentlichen parallel zum Rahmen und in Richtung des Fußendes verlaufendes erstes Bodenteil (13) oder Matratzenfeld der Matratze (33) in jedweder Gebrauchsposition des Sitz-Liegeeinsatzes mindestens den Stützabschnitt für die Wadenbeine, das folgende Bodenteil (12) oder Matratzenfeld den Sitzabschnitt und das hieran angelenkte dritte Bodenteil (11) oder Matratzenfeld den Rückenlehnenabschnitt bilden und
- die relative Winkelverstellung der Abschnitte durch Längenänderung und/oder durch Umsetzen der Anbindungspunkte der Abhänger (9, 10) erfolgt.

2. Sitz-Liegeeinsatz nach Anspruch 1, **dadurch gekennzeichnet, dass** die Halter (6, 7) Gelenke aufweisen oder schwenkbar obenseitig an den Adaptern (1, 2) befestigt sind oder dass die Adapter (1, 2) an den Seitenholmen des Rahmens (8) und/oder untenseitig an verschwenkbaren Kupplungselementen (23, 24) gelenkig angekoppelt sind, wobei mindestens eine Schwenkachse derart angeordnet ist, dass der Rahmen (8) eine Schwenkbewegung quer zur Längsrichtung beim Verschwenken vollzieht, und dass an mindestens einem der Halter (6, 7) korrespondierend mit dem jeweiligem Gelenk oder im Gelenk oder am Schwenklager an mindestens einem der Seitenholme lösbare Arretierungsmittel vorgesehen sind, die eine Arretierung der Adapter (1, 2) in mindestens zwei Winkelstellungen zu den Seitenholmen oder zur Längsachse des Fahrgestells bewirken.

3. Sitz-Liegeeinsatz nach Anspruch 1, **dadurch gekennzeichnet, dass** die Adapter (1, 2) an den Trägerelementen (30) oder an den Kupplungselementen (23, 24) oder direkt an den Schwenklagern im Gestell oder an den Seitenholmen zusätzlich um eine parallel zur Längsachse des Einsatzes und/oder um die quer hierzu verlaufende Achse der Art verschwenkbar befestigt sind und dass die Adapter (1, 2) aus einer mindestens senkrechten Gebrauchsstellung in mindestens eine, im Wesentlichen horizontale Verstaustellung verbringbar sind.

4. Sitz-Liegeeinsatz nach Anspruch 3, **dadurch gekennzeichnet, dass** lösbare Arretierungsmittel vorgesehen sind, um die Adapter (1, 2) in den verschiedenen Gebrauchsstellungen zu arretieren, und/oder Sicherungseinrichtungen zwischen dem Rahmen (8) und mindestens einem Adapter (1, 2) vorgesehen sind, um den Rahmen (8) in einer Schwenk- und/oder der Horizontalposition zu fixieren.

5. Sitz-Liegeeinsatz nach Anspruch 1, **dadurch gekennzeichnet, dass** der Rahmen (8) in Längsrichtung geradlinig und/oder als gestrecktes S ausgeführt ist oder aus einem geraden Oberrahmen (20)und einem untensei.tig, etwa mittig beginnend, einen gestreckten, L-förmigen Verlauf aufweisenden Unterrahmen (19) besteht und dass an Absatzabschnitten (22) des L-förmigen Unterrahmens die Adapter (1, 2) oder Halter (6, 7) hierfür oder bei geradliniger Ausführung direkt an den Seitenholmen oder bei S-förmiger Ausbildung des Rahmens (8) an den Zwischenteilen (22) befestigt sind.

6. Sitz-Liegeeinsatz nach Anspruch 1, **dadurch gekennzeichnet, dass** an mindestens einem stirnseitigen Querholm (15) des Rahmens (8) mindestens ein biegesteifes Element (16, 17, 18) als Kopf- oder Fußwand pendelnd befestigt oder hängend angelenkt ist.

7. Sitz-Liegeeinsatz nach Anspruch 6, **dadurch gekennzeichnet, dass** das die Kopfwand bildende biegesteife Element (16) über oder unter das Bodenteil (11) oder das korrespondierende Matratzenfeld, das sich bis zur Kopfwand (16) in der Gebrauchsposition des Sitz-Liegeeinsatzes als Liegeeinsatz erstreckt, bei dessen Umwandlung in eine Rückenlehne durch Neigungswinkelverstellung des Rahmens (8) verschwenkbar ist und eine untergreifende oder aufliegende Verlängerung hierzu bildet.

8. Sitz-Liegeeinsatz nach Anspruch 7, **dadurch gekennzeichnet, dass** das die Kopfwand bildende biegesteife Element (16) oder das die Rückenlehne bildende Bodenteil (11) von mindestens einem Haltemittel in der Überlappungsposition fixiert ist oder von einem Bügel (3) oder einem Gurtband zur gleitenden und/oder lösbaren Verbindung untergriffen wird, der schwenkbar oder das am Rahmen (8) befestigt ist.

9. Sitz-Liegeeinsatz nach Anspruch 1, **dadurch gekennzeichnet, dass** zur Aussteifung der Bodenteile (11, 12, 13) oder der Matratzenfelder diese mit Platten oder Stegen quer zur Längsrichtung durchzogen sind oder U-förmige oder rechteckige Rahmen an den Außenseiten aus Profilrohr oder Stäben aufweisen, wobei die Rahmen nur die Teile bzw. die Felder einzeln begrenzen.

10. Sitz-Liegeeinsatz nach Anspruch 1 oder 9, **dadurch gekennzeichnet, dass** die Matratze (33) oder die biegesteifen Bodenteile (11, 12, 13) Bestandteil eines Sitz-Liegeeinsatzes sind, der mindestens aus aus flexiblen faltbaren textilen Materialien oder aus Folienmaterial gebildeten Seiten- und Kopf- und Fußwänden besteht, die hängend am Rahmen (8) fixiert sind und die Abhänger (9, 10) selbst bilden und Mittel zur abschnittsweisen Höheneinstellung aufweisen oder die mit Abhängern (9, 10) zusammenwirken, die einerseits am Rahmen oder an den Seiten- und/oder Kopf- und Fußwänden und andererseits an Befestigungspunkten mit den anderen Enden an den Wänden und/oder an den Bodenteilen (11, 12, 13) oder den Matratzenfeldern lösbar befestigt sind, oder dass separate Gurtverschlusssysteme zum Anheben und Absenken der Bodenteile (11, 12, 13) bzw. der Matratzenfelder und der Seiten- und Kopf- oder Fußwände des Einsatzes vorgesehen sind.

11. Sitz-Liegeeinsatz nach Anspruch 10, **dadurch gekennzeichnet, dass** das Material der Wände mittels Schlaufen an dem Rahmen befestigt ist, derart, dass eine Vielzahl von Rahmenabschnitten sichtbar sind, oder dass an den Oberseiten der Seiten- und/oder Fuß- und Kopfwände Kederband befestigt ist, das in Lagerungsnuten in dem Rahmen (8) einziehbar ist.

12. Sitz-Liegeeinsatz nach Anspruch 10, **dadurch gekennzeichnet, dass** die textilen Materialien oder das Folienmaterial an den Bodenteilen (11, 12, 13) oder den Matratzenfeldern der Matratze (33) angenäht, angeklebt oder lösbar mittels Druckknöpfen, Reißverschluss oder mittels Kederband und Kunststoffnut befestigt sind oder Bestandteile des Überzugs der Bodenteile (11, 12, 13) oder der Matratze sind.

13. Sitz-Liegeeinsatz nach Anspruch 1, **dadurch gekennzeichnet, dass** der Rahmen (8) längsgeteilt ist und aus zwei seitlichen U-förmigen Teilen besteht, die jeweils an den Adaptern (1, 2) oder an Haltern (6, 7) schwenkbeweglich nach unten befestigt und mindestens in der gestreckten Stellung arretiert sind.

14. Sitz-Liegeeinsatz nach Anspruch 13, **dadurch gekennzeichnet, dass** der Halter (6, 7) zusätzlich einen Tragegriff aufweist, der gegenüber dem Rahmen (8) unten- oder obenseitig angebracht ist.

15. Sitz-Liegeeinsatz nach einem der Ansprüche 6 bis 8, **dadurch gekennzeichnet, dass** die biegesteifen Elemente (16, 17, 18) an den kopf- oder fußseitigen Querholmen des Rahmens (8) und/oder gegenüber den Bodenteilen (11, 12, 13) verschwenkbar angeordnet sind und dass der Rahmen (8) durch 90° Absenkung der Adapter (1, 2) in Richtung zur Anlage an den Boden verbringbar ist oder über dem Boden in geringem Abstand endet.

16. Sitz-Liegeeinsatz nach Anspruch 1, **dadurch gekennzeichnet, dass** die Adapter (1, 2) an einem sie verbindenden Brückenteil seitlich nach oben vorstehen.

17. Sitz-Liegeeinsatz nach Anspruch 16, **dadurch gekennzeichnet, dass** das Brückenteil mindestens ein Abschnitt des zweiten als Mitten- und Sitzteil vorgesehenen Bodenteils (12) ist.

18. Sitz-Liegeeinsatz nach Anspruch 1 oder 15, **dadurch gekennzeichnet, dass** die Abhänger (9, 10) verlängerbar ausgeführt sind, dass an diesen Befestigungselemente, insbesondere Druckknöpfe, vorgesehen sind, mit denen sie an Gegenbefestigungselementen an den Bodenteilen (11, 12, 13) oder an dem Rahmen (8) oder an den flexiblen Seitenwänden des Behältnisses, die aus Stoff oder Folie bestehen, an denen sie in bestimmter Anordnung zur Realisierung unterschiedlicher Funktionen des Einsatzes vorgesehen sind, befestigbar sind oder dass als Abhänger (19) Gurtsysteme oder an den Seitenwänden lösbare Verbinder oder Reißverschlüsse zur überlappenden Verbindung von Seitenteilen vorgesehen sind.

19. Sitz-Liegeeinsatz nach Anspruch 1 oder 18, **dadurch gekennzeichnet, dass** die Abhänger (9, 10) Gurte oder Bänder sind oder mindestens an den Außen- oder Innenseiten der Rahmenteile oder der Wände vorgesehen oder als Abhänger in Form gelochter Bänder oder Gurte ausgebildet sind, deren Längen durch Umsetzen der Löcher auf Halteansätze einstellbar sind.

20. Sitz-Liegeeinsatz nach Anspruch 1 oder 13, **dadurch gekennzeichnet, dass** an dem Kopfteil des Rahmens (8) oder an dem Halter (6, 7) ein aufklappbares Verdeck befestigt ist.

21. Sitz-Liegeeinsatz nach Anspruch 1, **dadurch gekennzeichnet, dass** das Fußgestell aus an den Adaptern (1, 2) in Längsrichtung des Einsatzes ausstellbaren Einzelfüßen oder einem, die Adapter (1, 2) verbindenden Fußbügel (21) besteht, die oder der in der einen Gebrauchsstellung gespreizt und auf einen Aufstellboden aufstellbar sind oder ist und seitlich unter dem Boden enden und in einer zweiten Gebrauchsstellung zusammengeklappt eine Verlängerung zu den Adaptern (1, 2) bilden oder an diesen anliegen oder ineinander geschoben versenkt sind.

22. Sitz-Liegeeinsatz nach Anspruch 1, **dadurch gekennzeichnet, dass** an aus dem Wagengestell entnehmbaren Trägerelementen (30) in Längsrichtung des Einsatzes ausstellbare Füße oder die Adapter (1, 2) verbindende Bügel (21) vorgesehen sind, die in der einen Gebrauchsstellung gespreizt und auf einen Aufstellboden aufstellbar sind und seitlich unter dem Boden enden und in einer zweiten Gebrauchsstellung zusammengeklappt eine Verlängerung zu den damit verbindbaren Adaptern (1, 2) bilden oder an diesen anliegen oder ineinander geschoben versenkt sind.

23. Sitz-Liegeeinsatz nach Anspruch 4, **dadurch gekennzeichnet, dass** als Sicherungseinrichtung an mindestens einem Längsholm des Rahmens (8) hinter dem Halter (6,7) am kopfseitigen Rahmenabschnitt ein Fangbügel (29) angelenkt ist, der bei unbeabsichtigtem Verschwenken des Rahmens (8) einen am Adapter (1, 2) seitlich vorstehenden Fanghaken (28) untergreift und den Schwenkweg des Rahmens (8) begrenzt.

24. Sitz-Liegeeinsatz nach Anspruch 1, **dadurch gekennzeichnet, dass** die Adapter (1, 2) hohl und auf ein Trägerelement (30) aufsteckbar ausgeführt sind.

25. Sitz-Liegeeinsatz nach Anspruch 24, **dadurch gekennzeichnet, dass** das Trägerelement (30) mittels eines verschwenkbaren Sicherungshakens (31) oder mittels lösbarer Formfederrastverbindung im Adapter (1, 2) gesichert gehalten ist.

26. Sitz-Liegeeinsatz nach Anspruch 1, 2, 24 oder 25, **dadurch gekennzeichnet, dass** in das Trägerelement (30) oder in den Adapter ein Kupplungsstück (23, 24) mit einer Schwenkmechanik einsteckbar oder hieran befestigbar ist.

27. Sitz-Liegeeinsatz nach Anspruch 1, **dadurch gekennzeichnet, dass** an dem Rahmen (8) beidseitig von den Haltern (6, 7) Spannbügel (34, 35), außenseitig an den Seitenwänden des Einsatzes verlaufend, verschwenkund ausstellbar angelenkt sind, die die Matratze (33) oder die Bodenteile (11, 12, 13) oder die Bodenplatte untergreifen, wobei mindestens ein Spannbügel (34) in Längsrichtung an der Unterseite der Matratze (33) oder Bodenteil oder Bodenplatte vorgesehene Rastelemente (36, 37) mit Längsführung mindestens in einer steilen und einer flachen Schrägstellung gesichert gehalten ist.

## Claims

1. Convertible seat/lying-down insert for baby carriages or doll's prams, comprising an upper encircling frame (8), at which are suspension means (9, 10) for fastening to a base with pivotably interconnected base parts (11, 12, 13), which are stiff in bending and define transversely extending fold axes, or a foldable mattress (33), which has transversely extending fold axes, with stiffened panels, and devices for pivotable fastening of the frame (8) to support elements in or at the chassis of the baby carriage or doll's pram, wherein the seat/lying-down insert is transferrable from the use setting as a lying-down insert to a use setting as a seat insert by bringing the frame (8) from a substantially horizontal position into at least one inclined position, **characterised in that**
- downwardly extending adapters (1, 2) lying approximately at the centre-of-gravity axis of the frame (8) or offset towards the head end of the frame are provided at the side bars of the frame (8) and are fastenable directly or via mounts (6, 7) thereto and at the underside in or on the chassis or on a pedestal placeable on a support base, and
- the adapters (1, 2) are settable at the top and/or bottom at different angles of inclination or the frame (8) is settable into different angles of inclination relative to the adapters (1, 2),
- wherein in the horizontal position of the frame (8) a first base part (13) or mattress panel of the mattress (33), which extends substantially parallel to the frame and in the direction of the foot end, in each position of use of the seat/lying-down insert forms at least the support section for the fibulae, the following base part (12) or mattress panel forms the sitting section and the third base part (11) or mattress panel articulated thereto forms the backrest section and
- the relative angular adjustment of the sections is carried out by change in length and/or by changing the connecting points of the suspension means (9, 10).

2. Seat/lying-down insert according to claim 1, **characterised in that** the mounts (6, 7) have joints or are pivotably fastened at the top to the adapters (1, 2) or that the adapters (1, 2) are pivotably coupled to the side bars of the frame (8) and/or at the bottom to pivotable coupling elements (23, 24), wherein at least one pivot axis is arranged in such a manner that the frame (8) on pivotation executes a pivot movement transversely to the longitudinal direction and that releasable locking means producing locking of the adapters (1, 2) in at least two angular settings relative to the side bars or the longitudinal axis of the chassis are provided on at least one of the mounts (6, 7) to correspond with the respective joint or in the joint or at the pivot bearing at at least one of the side bars.

3. Seat/lying-down insert according to claim 1, **characterised in that** the adapters (1, 2) are fastened to the support elements (30) or to the coupling elements (23, 24) or directly to the pivot bearings in the chassis or to the side bars so as to additionally be pivotable about an axis extending parallel to the longitudinal axis of the insert and/or about the axis extending transversely thereto and that the adapters (1, 2) can be brought from an at least perpendicular use setting into at least one substantially horizontal stowage setting.

4. Seat/lying-down insert according to claim 3, **characterised in that** releasable locking means are provided in order to lock the adapters (1, 2) in the different use settings and/or securing devices are provided between the frame (8) and at least one adapter (1, 2) in order to fix the frame (8) in a pivot position and/or the horizontal position.

5. Seat/lying-down insert according to claim 1, **characterised in that** the frame (8) is constructed in longitudinal direction to be straight and/or as an elongated S or consists of a straight upper frame (20) and at the lower side a lower frame (19) beginning approximately centrally and having an elongated L-shaped course and that the adapters (1, 2) or mounts (6, 7) for the adapters are attached to shoulder sections (22) of the L-shaped lower frame or directly to the side posts if the frame (8) is of straight construction or to the intermediate parts (22) if the frame (8) is of S-shaped construction.

6. Seat/lying-down insert according to claim 1, **characterised in that** at least one element (16, 17, 18) stiff in bending is, as head wall or foot wall, fastened to at least one end crossbar (15) of the frame (8) to be pendulating or articulated thereto to be hanging.

7. Seat/lying-down insert according to claim 6, **characterised in that** the element (16) stiff in bending and forming the head wall is pivotable over or under the base part (11) or the corresponding mattress panel, which extends up to the head wall (16) in the use position of the seat/lying-down insert as lying-down insert, on conversion thereof into a backrest by adjustment of the angle of inclination of the frame (8), and forms an extension thereof engaging underneath or resting on top.

8. Seat/lying-down insert according to claim 7, **characterised in that** the element (16) stiff in bending and forming the head wall or the base part (11) forming the backrest is fixed by at least one retaining means in the overlapping position or is engaged under by a bracket (3) or a strap, which is pivotable or attached to the frame (8), for the sliding and/or detachable connection.

9. Seat/lying-down insert according to claim 1, **characterised in that** for stiffening the base parts (11, 12, 13) or the mattress panels these are penetrated transversely to the longitudinal direction by plates or webs or have U-shaped or rectangular frames of profiled tubes or rods at the outer sides, wherein the frames bound the parts or panels only individually.

10. Seat/lying-down insert according to claim 1 or 9, **characterised in that** the mattress (33) or the base parts (11, 12, 13) stiff in bending is or are a component of a sitting/lying-down insert which consists at least of side, head and foot walls, which are formed from flexible foldable textile materials or film materials and which are fixed at the frame (8) to hang and form the suspension means (9, 10) themselves and have means for section-bysection height adjustment or co-operate with suspension means (9, 10), which are detachably fastened on the one hand to the frame or to the side walls and/or head and foot walls and on the other hand at fastening points by the other ends to the walls and/or to the base parts (11, 12, 13) or to the mattress panels, or that separate strap fastening systems for raising and lowering the base parts (11, 12, 13) or the mattress panels and the side, head or foot walls of the insert are provided.

11. Seat/lying-down insert according to claim 10, **characterised in that** the material of the walls is fastened to the frame by means of loops in such a manner that a plurality of frame sections is visible or that a bead strip able to be drawn into mounting grooves in the frame (8) is attached to the upper sides of the side walls and/or foot and head walls.

12. Seat/lying-down insert according to claim 10, **characterised in that** the textile materials or the film material is or are sewn, glued or detachably fastened, by means of press studs or zip fastener or by means of bead strip and plastic groove, to the base parts (11, 12, 13) or the mattress panels of the mattress (33) or is or are components of the cover of the base parts (11, 12, 13) or of the mattress.

13. Seat/lying-down insert according to claim 1, **characterised in that** the frame (8) is longitudinally divided and consists of two lateral U-shaped parts which are respectively fastened to the adapters (1, 2) or mounts (6, 7) to be pivotably movable downwardly and are locked at least in the extended setting.

14. Seat/lying-down insert according to claim 13, **characterised in that** the mounts (6, 7) additionally comprise a handle mounted at the top or bottom opposite the frame (8).

15. Seat/lying-down insert according to any one of claims 6 to 8, **characterised in that** the elements (16, 17, 18) stiff in bending are pivotably arranged at the transverse bars of the frame (8) at the head or foot end and/or opposite the base parts (11, 12, 13) and that the frame (8) can be brought, by lowering the adapters (1, 2) through 90°, in the direction of contact with the base or ends above the base at a small spacing.

16. Seat/lying-down insert according to claim 1, **characterised in that** the adapters (1, 21) project upwardly at the sides at a bridge part connecting the adapters.

17. Seat/lying-down insert according to claim 16, **characterised in that** the bridge part is at least a section of the second base part provided as centre part and sitting part.

18. Seat/lying-down insert according to claim 1 or 15, **characterised in that** the suspension means (9, 10) are constructed to be extensible, that provided at the suspension means are fastening elements, particularly press studs, by which they are fastenable to counter-fastening elements at the base parts (11, 12, 13) or at the frame (8) or at the flexible side walls of the receptacle, which consist of material or film, at which they are provided in a defined arrangement for realisation of different functions of the insert, or that provided as suspension means (19) are strap systems or at the side walls detachable connectors or zip fasteners for overlapping connection of side parts.

19. Seat/lying-down insert according to claim 1 or 18, **characterised in that** the suspension means (9, 10) are straps or bands or are provided at least at the outer or inner sides of the frame parts or the walls or are constructed as suspension means in the form of apertured bands or straps, the lengths of which are settable by changing the holes on retaining protrusions.

20. Seat/lying-down insert according to claim 1 or 13, **characterised in that** a cover able to be unfolded is attached to the head part of the frame (8) or to the mount (6, 7).

21. Seat/lying-down insert according to claim 1, **characterised in that** the pedestal consists of individual feet extendable at the adapters (1, 2) in the longitudinal direction of the insert or a foot bracket (21) connecting the adapters (1, 2), the feet or bracket being spread in one use setting and placeable on a support base to end laterally under the base and being folded together in a second use setting to form an extension of the adapters (1, 2) or bearing against these or lowered by being pushed into one another.

22. Seat/lying-down insert according to claim 1, **characterised in that** provided at support elements (30), which are removable from the carriage or pram chassis, are feet extensible in the longitudinal direction of the insert or brackets (21) connecting the adapters (1, 2), the feet or brackets being spread in one use setting and placeable on a support base to end laterally under the base and being folded together in a second use setting to form an extension of the adapters (1, 2) or bearing against these or lowered by being pushed into one another.

23. Seat/lying-down insert according to claim 4, **characterised in that** a catch bracket (29) is articulated, as securing device, to at least one longitudinal bar of the frame (8) behind the mount (6, 7) at the frame section at the head end, the bracket engaging under a catch hook (28), which laterally protrudes at the adapter (1, 2), when the frame (8) is unintentionally pivoted, and limiting the pivot movement of the frame (8).

24. Seat/lying-down insert according to claim 1, **characterised in that** the adapters (1, 2) are constructed to be hollow and to be able to be plugged onto a support element (30).

25. Seat/lying-down insert according to claim 24, **characterised in that** the support element (30) is held to be secured in the adapter (1, 2) by means of a pivotable securing hook (31) or by means of a releasable shaped spring detent connection.

26. Seat/lying-down insert according to claim 1, 2, 24, 25, **characterised in that** a coupling member (23, 24) is insertable by a pivot mechanism into the support element (30) or into the adapter or is fastenable thereto.

27. Seat/lying-down insert according to claim 1, **characterised in that** clamping brackets (34, 35) are pivotably and extensibly articulated to the frame (8) on both sides of the mounts (6, 7) to extend externally at the side walls of the insert and engage under the mattress (33) or the base parts (11, 12, 13) or the base plate, wherein at least one clamping bracket (34) is held to be secured at least in a steeply inclined setting and a flatly inclined setting by longitudinal guidance at detent elements (36, 37) provided in longitudinal direction at the underside of the mattress (33) or base part or base plate.

## Revendications

1. Garniture transformable formant siège/lit pour poussette d'enfants ou de poupées, comprenant un cadre périphérique supérieur (8) sur lequel sont prévues des suspentes (9, 10) pour la fixation de parties de fond (11, 12, 13) résistant à la flexion qui forment un fond avec des axes de pliage transversaux et qui sont reliées de façon articulée les unes avec les autres, ou pour la fixation d'un matelas (33) pliable présentant des axes de pliage transversaux avec des zones rigidifiées, des moyens pour la fixation en pivotement du cadre (8) sur des éléments porteurs dans ou sur le châssis de la poussette d'enfants ou de poupées, dans laquelle, en déplaçant le cadre (8) depuis une position sensiblement horizontale jusque dans au moins une position oblique, la garniture formant siège/lit est convertible depuis la situation d'utilisation en tant que garniture formant lit vers une situation d'utilisation en tant que garniture formant siège, **caractérisée en ce que :**
- il est prévu sur les montants latéraux du cadre (8) des adaptateurs (1, 2) qui s'étendent vers le bas, placés approximativement sur l'axe de gravité du cadre (8) ou décalés vers le côté de tête du cadre, qui sont susceptibles d'être fixés à la face inférieure sur le cadre directement ou via des montures (6, 7), ou bien dans ou sur le châssis, ou encore sur un châssis-piétement à poser sur le sol, et
- **en ce que** les adaptateurs (1, 2) sont réglables du côté supérieur et/ou inférieur sous des angles d'inclinaison différents, ou bien le cadre (8) est réglable à différents angles d'inclinaison par rapport aux adaptateurs (1, 2),
- de sorte que lorsque le cadre (8) est en position horizontale, une première partie de fond (13) ou une première zone (33) du matelas qui s'étend sensiblement parallèlement au cadre et en direction de l'extrémité côté pied forme dans toute position d'utilisation de la garniture formant siège/lit au moins un tronçon de soutien pour les jambes, la partie de fond suivante (12) ou la zone de matelas suivante forme le tronçon d'assise, et la troisième partie de fond (11) ou la troisième zone de matelas articulée à celle-ci forme le tronçon de dossier, et
- le déplacement angulaire relatif des tronçons a lieu par modification de longueur et/ou par déplacement des points de liaison des suspentes (9, 10).

2. Garniture formant siège/lit selon la revendication 1, **caractérisée en ce que** les montures (6, 7) présentent des articulations ou sont fixées en pivotement du côté supérieur sur les adaptateurs (1, 2), ou **en ce que** les adaptateurs (1, 2) sont couplés de façon articulée aux montants latéraux du cadre (8) et/ou du côté inférieur sur des éléments de couplage capables de pivoter (23, 24), et au moins un axe de pivotement est agencé de telle façon que le cadre (8) exécute un mouvement de pivotement transversalement à la direction longitudinale lors du pivotement, et **en ce qu'**il est prévu soit sur l'une au moins des montures (6, 7) en correspondance de l'articulation respective, soit dans l'articulation, soit encore au niveau du palier de pivotement sur l'un au moins des montants latéraux, des moyens d'arrêt libérables qui assurent un arrêt des adaptateurs (1, 2) dans au moins deux positions angulaires par rapport aux montants latéraux ou par rapport à l'axe longitudinal du châssis.

3. Garniture formant siège/lit selon la revendication 1, **caractérisée en ce que** les adaptateurs (1, 2) sont fixés aux éléments porteurs (30) ou aux éléments de couplage (23, 24) ou directement aux paliers de pivotement dans le châssis ou encore aux montants latéraux additionnellement en pivotement autour d'un axe qui s'étend parallèlement à l'axe longitudinal de la garniture et/ou autour d'un axe perpendiculaire à celui-ci, et **en ce que** les adaptateurs (1, 2) sont susceptibles d'être amenés à partir d'une position d'utilisation au moins sensiblement verticale jusque dans au moins une position de rangement sensiblement horizontale.

4. Garniture formant siège/lit selon la revendication 3, **caractérisée en ce qu'**il est prévu des moyens d'arrêt libérables pour arrêter les adaptateurs (1, 2) dans les diverses positions d'utilisation, et/ou **en ce qu'**il est prévu des systèmes de blocage entre le cadre (8) et au moins un adaptateur (1, 2) afin de fixer le cadre (8) dans une position pivotée et/ou dans la position horizontale.

5. Garniture formant siège/lit selon la revendication 1, **caractérisée en ce que** le cadre (8) est réalisé sous forme rectiligne et/ou sous forme de S étiré en direction longitudinale, ou est constitué d'un cadre supérieur rectiligne (20) et d'un cadre inférieur (19) situé du côté inférieur, commençant approximativement au milieu et présentant un tracé étiré en forme de L, et **en ce que** les adaptateurs (1, 2) ou les montures (6, 7) pour ceux-ci sont fixé(e)s sur les tronçons de talons (22) du cadre inférieur en forme de L, ou bien dans le cas d'une réalisation rectiligne, les adaptateurs (1, 2) ou leurs montures (6, 7) sont fixé(e)s directement sur les montants latéraux, ou encore dans le cas d'une réalisation en forme de S du cadre (8) ils/elles sont fixé(e)s sur les parties intermédiaires (22).

6. Garniture formant siège/lit selon la revendication 1, **caractérisée en ce qu'**au moins un élément (16, 17, 18) rigide vis-à-vis de la flexion est fixé de manière pendulaire ou articulée en suspension, à titre de paroi de tête ou de pied, sur au moins un montant transversal frontal (15) du cadre (8).

7. Garniture formant siège/lit selon la revendication 6, **caractérisée en ce que** l'élément (16) rigide vis-à-vis de la flexion et formant la paroi de tête est capable de pivoter, lors de sa conversion en un dossier par modification angulaire de l'inclinaison du cadre (8), au-dessus ou au-dessous de la partie de fond (11) ou de la zone de matelas correspondant, qui s'étend jusqu'à la paroi de tête (16) dans la position d'utilisation de la garniture formant siège/lit à titre de garniture formant lit, et forme un prolongement à celle-ci en passant par dessous ou par dessus.

8. Garniture formant siège/lit selon la revendication 7, **caractérisée en ce que** l'élément (16) rigide vis-à-vis de la flexion et formant la paroi de tête ou la partie de fond (11) formant le dossier est fixé(e) par au moins un organe de maintien dans la position de chevauchement, ou est soutenu(e) par le dessous par un étrier (3) ou par une ceinture en vue d'une liaison en coulissement et/ou d'une liaison détachable, l'étrier étant fixé en pivotement sur le cadre (8) ou la ceinture étant fixée sur le cadre (8).

9. Garniture formant siège/lit selon la revendication 1, **caractérisée en ce que** pour rigidifier les parties de fond (11, 12, 13) ou les zones de matelas, celles-ci sont traversées par des plaques ou des barres transversalement à la direction longitudinale, ou comportent des cadres en forme de U ou des cadres rectangulaires au niveau des côtés extérieurs, en tubes profilés ou en barreaux, lesdits cadres délimitant individuellement uniquement les parties ou les zones.

10. Garniture formant siège/lit selon la revendication 1 ou 9, **caractérisée en ce que** le matelas (33) ou les parties de fond (11, 12, 13) rigides vis-à-vis de la flexion font partie d'une garniture formant siège/lit qui est constituée par des parois de tête, des parois latérales et des parois de pied réalisées en matériau textile capable d'être plié ou en matériau en feuille, qui sont fixées en suspension au cadre (8) et forment elles-mêmes les suspentes (9, 10), et présentent des moyens pour le réglage en hauteur par tronçon, où qui coopèrent avec des suspentes (9, 10), lesquelles sont fixées de façon détachable d'une part au cadre aux parois latérales et/ou à la paroi de tête et la paroi de pied et d'autre part à des points de fixation avec les autres extrémités sur les parois et/ou sur les parties de fond (11, 12, 13) ou sur les zones de matelas, ou **en ce que** des systèmes de fermeture de ceinture séparés seront prévus le pour soulever et abaisser les parties de fond (11, 12, 13) ou les zones de matelas et les parois latérales et la paroi de tête ou la paroi de pied de la garniture.

11. Garniture formant siège/lit selon la revendication 10, **caractérisée en ce que** le matériau des parois est fixé sur le cadre au moyen de boucles, de telle façon qu'une pluralité de tronçons de cadres sont visibles, ou bien **en ce qu'**une bande-bourrelet, susceptible d'être introduite dans des rainures de réception dans le cadre (8), est fixée sur les côtés supérieurs des parois latérales et/ou de la paroi de tête et de la paroi de pied.

12. Garniture formant siège/lit selon la revendication 10, **caractérisée en ce que** le matériau textile ou le matériau en feuille est fixé sur les parties de fond (11, 12, 13) ou sur les zones de matelas (33) par couture, par collage ou de façon détachable au moyen de boutons-pression, de fermetures agrippantes ou au moyen d'une bande-bourrelet et d'une rainure en matière plastique, ou font partie de l'enveloppe des parties de fond (11, 12, 13) ou du matelas.

13. Garniture formant siège/lit selon la revendication 1, **caractérisée en ce que** le cadre (8) est divisé en longueur et est constitué de deux parties latérales en forme de U, qui sont fixées respectivement vers le bas sur les adaptateurs (1, 2) ou sur les montures (6, 7) avec possibilité de pivotement, et sont arrêtées au moins dans la position étirée.

14. Garniture formant siège/lit selon la revendication 13, **caractérisée en ce que** la monture (6, 7) comporte additionnellement une poignée de transport, montée du côté inférieur ou du côté supérieur par rapport au cadre (8).

15. Garniture formant siège/lit selon l'une des revendications 6 à 8, **caractérisée en ce que** les éléments (16, 17, 18) rigides vis-à-vis de la flexion sont agencés avec possibilité de pivotement sur les montants transversaux du cadre (8) côté tête ou côté pied et/ou vis-à-vis des parties de fond (11, 12, 13), et **en ce que** le cadre (8) peut être amené par descente des adaptateurs (1, 2) de 90° en direction du contact contre le fond, ou se termine à faible distance au-dessus du fond.

16. Garniture formant siège/lit selon la revendication 1, **caractérisé en ce que** les adaptateurs (1, 2) dépassent latéralement vers le haut au niveau d'une partie de pontage qui les relie.

17. Garniture formant siège/lit selon la revendication 16, **caractérisée en ce que** la partie de pontage est au moins un tronçon de la seconde partie de fond (12) prévue à titre de partie médiane et de partie d'assise.

18. Garniture formant siège/lit selon la revendication 1 ou 15, **caractérisée en ce que** les suspentes (9, 10) sont réalisées de manière à pouvoir être prolongées, **en ce que** des éléments de fixation, en particulier des boutons-pression, sont prévus sur les suspentes, au moyen desquelles ils peuvent être fixés à des éléments de fixation antagonistes au niveau des parties de fond (11, 12, 13) ou au niveau du cadre (8), ou encore au niveau des parois latérales flexibles du récipient sur lequel ils sont prévus dans un agencement déterminé pour réaliser des fonctions différentes de la garniture, ces parois étant formées de tissus ou de matériaux en feuille, ou **en ce qu'**il est prévu à titre de suspentes (19) des systèmes à sangle ou des éléments de liaison détachables sur les parois latérales, ou encore des fermetures agrippantes, pour la liaison en chevauchement des parties latérales.

19. Garniture formant siège/lit selon la revendication 1 ou 18, **caractérisée en ce que** les suspentes (9, 10) sont des sangles ou des bandes, ou sont prévues au moins sur les faces extérieures ou intérieures des parties du cadre ou des parois, ou **en ce que** les suspentes sont réalisées sous la forme de bandes ou de sangles trouées dont la longueur est réglable par accrochage des trous sur des ergots de retenue.

20. Garniture formant siège/lit selon la revendication 1 ou 13, **caractérisée en ce qu'**une couverture rabattable est fixée sur la partie de tête du cadre (8) ou sur la monture (6, 7).

21. Garniture formant siège/lit selon la revendication 1, **caractérisée en ce que** le châssis-piétement est constitué par des pieds individuels capables d'être déployés au niveau des adaptateurs (1, 2) en direction longitudinale de la garniture, ou par un étrier de pied (21) qui relie les adaptateurs (1, 2), les pieds ou l'étrier pouvant être écarté(s) jusque dans une position d'utilisation et posé(s) sur le sol, et se termine(nt) latéralement au-dessous du sol, et formant, en étant rabattu(s) dans une seconde position d'utilisation, un prolongement des adaptateurs (1, 2) ou en étant appliqué(s) contre ceux-ci ou enfilé(s) les uns dans les autres.

22. Garniture formant siège/lit selon la revendication 1, **caractérisée en ce qu'**il est prévu, sur les éléments porteurs (30) susceptibles d'être enlevés hors du châssis de poussette, des pieds déployables en direction longitudinale de la garniture ou un étrier (21) qui relie les adaptateurs (1, 2), qui peut/peuvent être écarté(s) en position d'utilisation est posé(s) sur un sol, et se termine(nt) latéralement au-dessous du sol, et qui forme(nt), en étant rabattus dans une seconde position d'utilisation, un prolongement des adaptateurs (1, 2) reliés à celui-ci/ceux-ci, ou est/sont appliqué(s) contre ceux-ci ou enfilé(s) les uns dans les autres.

23. Garniture formant siège/lit selon la revendication 4, **caractérisée en ce qu'**il est prévu un étrier de retenue (29) à titre de système de blocage, articulé sur au moins un montant longitudinal du cadre (8) derrière la monture (6, 7) au niveau du tronçon de case côté tête, cet étrier de retenue, lors d'un pivotement inopiné du cadre (8), engageant par le dessous un crochet de retenue (28) dépassant latéralement sur l'adaptateur (1, 2) et limitant le trajet de pivotement du cadre (8).

24. Garniture formant siège/lit selon la revendication 1, **caractérisée en ce que** les adaptateurs (1, 2) sont creux et réalisés de manière à pouvoir être enfichés sur un élément porteur (30).

25. Garniture formant siège/lit selon la revendication 24, **caractérisée en ce que** l'élément porteur (30) est maintenu de façon bloquée dans l'adaptateur (1, 2) au moyen d'un crochet de blocage pivotant (31) ou au moyen d'une liaison à enclenchement détachable à ressort conformé.

26. Garniture formant siège/lit selon la revendication 1, 2, 24 ou 25, **caractérisée en ce qu'**une pièce d'accouplement (23, 24) avec un mécanisme de pivotement est susceptible d'être enfilée dans l'élément porteur (30) ou dans l'adaptateur, ou d'être fixée sur celui-ci.

27. Garniture formant siège/lit selon la revendication 1, **caractérisée en ce que** des étriers de serrage (34, 35), qui s'étendent du côté extérieur au niveau des parois latérales de la garniture, sont articulés de manière à pouvoir pivoter et être déployés, sur le cadre (8) des deux côtés des montures (6, 7), ces étriers de serrage engageant le matelas (33) ou les parties de fond (11, 12, 13) ou encore la plaque de fond par le dessous, et au moins un étrier de serrage (34) est maintenu de façon bloquée en direction longitudinale au moins dans une position verticale et une position en oblique à plat au moyen d'éléments d'enclenchement (36, 37) prévus à la face inférieure du matelas (33) ou de la partie de fond ou de la plaque de fond avec guidage longitudinal.
